(19) Europäisches Patentamt / European Patent Office / Office européen des brevets

(11) **EP 4 040 059 B1**

(12) **EUROPEAN PATENT SPECIFICATION**

(45) Date of publication and mention
of the grant of the patent:
**17.04.2024 Bulletin 2024/16**

(21) Application number: **19948181.3**

(22) Date of filing: **01.10.2019**

(51) International Patent Classification (IPC):
**F24F 11/00** (2018.01)    **F24F 11/64** (2018.01)
**F24F 11/77** (2018.01)    **F24F 7/007** (2006.01)
**F24F 7/08** (2006.01)

(52) Cooperative Patent Classification (CPC):
**F24F 11/0001; F24F 11/64; F24F 11/77;**
**F24F 12/006;** F24F 7/007; F24F 7/08;
F24F 2110/70; Y02B 30/70

(86) International application number:
**PCT/JP2019/038680**

(87) International publication number:
**WO 2021/064844 (08.04.2021 Gazette 2021/14)**

(54) **VENTILATION APPARATUS AND VENTILATION CONTROL METHOD**

LÜFTUNGSVORRICHTUNG UND LÜFTUNGSTEUERUNGSVERFAHREN

DISPOSITIF DE VENTILATION ET PROCÉDÉ DE COMMANDE DE VENTILATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**10.08.2022 Bulletin 2022/32**

(73) Proprietor: **MITSUBISHI ELECTRIC**
**CORPORATION**
**Chiyoda-ku**
**Tokyo 100-8310 (JP)**

(72) Inventor: **OKEYA, Kenta**
**Tokyo 100-8310 (JP)**

(74) Representative: **Witte, Weller & Partner**
**Patentanwälte mbB**
**Postfach 10 54 62**
**70047 Stuttgart (DE)**

(56) References cited:
**WO-A1-2018/139015**    **JP-A- 2002 206 778**
**JP-A- 2013 011 405**    **JP-A- 2013 228 114**
**JP-A- 2014 095 532**    **JP-A- 2014 173 799**
**JP-A- 2015 172 472**    **JP-A- 2016 044 944**
**US-A1- 2005 095 978**    **US-A1- 2012 064 818**

**Description**

Field

The present invention relates to a ventilation apparatus and a ventilation control method. Note that the ventilation control method is a method of controlling the ventilation apparatus.

Background

In order to reduce the energy used by an air conditioner and also offer comfortable air conditioning, there has been conventionally used a heat exchange ventilation apparatus that allows for heat exchange between supply air and exhaust air to reduce a temperature difference between the supply air and the exhaust air and guide the supply air into a room, the supply air being introduced into the room from the outside of the room by a supply blower, and the exhaust air being discharged from the room to the outside of the room by an exhaust blower.

Also, air pollution in a room is typically represented by carbon dioxide ($CO_2$) concentration. In an office, a building, or the like, the $CO_2$ concentration varies greatly due to an amount of human activity in a room such as an increase or decrease in the number of people in the room. Normally, the ventilation in an office, a building, or the like is designed such that the $CO_2$ concentration in the room is lower than or equal to a certain value in a state where an occupancy rate of the room is 100%. However, according to a survey in literature or the like, the actual occupancy rate of a room is 60% to 70% in many cases.

Moreover, the ventilation air volume of the heat exchange ventilation apparatus is often fixed at an air volume specified by a user using a remote control installed on a wall surface, for example. For this reason, depending on the ventilation air volume specified, there is a problem in that the ventilation air volume is insufficient and the $CO_2$ concentration in the room increases when the amount of human activity in the room is high such as when there are many people in the room. In addition, depending on the ventilation air volume specified, there is a problem in that excessive ventilation is performed when the amount of human activity in the room is low such as when only a small number of people are in the room or when no person is in the room in early morning and night hours or the like. The excessive ventilation increases an air conditioning load and is not preferable in terms of energy saving.

Japanese Patent Application Laid-open No. 2014-95532 discloses a ventilation apparatus that includes a $CO_2$ sensor (corresponding to a carbon dioxide sensor of Japanese Patent Application Laid-open No. 2014-95532) that detects $CO_2$ gas in a room, sets a switching threshold on the basis of preset target concentration and a maximum value of the $CO_2$ concentration in the room in the past, and controls the ventilation air volume on the basis of the set switching threshold and current $CO_2$ concentration in the room. In particular, in the ventilation apparatus disclosed in Japanese Patent Application Laid-open No. 2014-95532, when the current $CO_2$ concentration in the room exceeds the switching threshold, the air volume becomes larger than that when the current $CO_2$ concentration in the room does not exceed the switching threshold. US 2012/0064818 A1, according to its abstract, states that a ventilation system for an air conditioning system includes dampers, a heat exchange unit, and a control unit. One damper controls the flow of ambient air into the system. The other damper controls the flow of relief/exhaust air that is cannibalized from return air from a room or space being cooled (or heated) by the air conditioning system. The ventilation system utilizes a control algorithm in the control unit to calculate, at stepped spaced apart increasing room ventilation rates, increasing C02 concentrations in the air in the room that are below a maximum desired C02 concentration in a room. The control algorithm permits a control unit in the ventilation system to open and close the dampers to maintain a C02 concentration in the room that is below the desired C02 concentration level.

Summary

Technical Problem

When a designer sets the air volume or the like of the ventilation apparatus, the $CO_2$ concentration of the outdoor air is assumed to be a typical value of 400 ppm in many cases. However, in reality, there is a case where the $CO_2$ concentration of the outdoor air in a place where the ventilation apparatus is installed is higher than or equal to 400 ppm such as when a building where the ventilation apparatus is installed faces a highway on which many automobiles travel. When the $CO_2$ concentration of the outdoor air increases, the $CO_2$ concentration in the room increases as well.

The ventilation apparatus disclosed in Japanese Patent Application Laid-open No. 2014-95532 does not take into consideration the $CO_2$ concentration of the outdoor air in setting the switching threshold and controlling the ventilation air volume. For this reason, in the ventilation apparatus disclosed in Japanese Patent Application Laid-open No. 2014-95532, when the $CO_2$ concentration of the outdoor air is high, there is a possibility that the $CO_2$ concentration exceeds the switching threshold even when the amount of human activity in the room is low. Thus, there has been a possibility that a ventilation blower disclosed in Japanese Patent Application Laid-open No. 2014-95532 performs ventilation excessively for the amount of human activity in the room depending on the $CO_2$ concentration of the outdoor air.

An object of the present disclosure is to provide a ventilation apparatus, a ventilation system, and a ventilation control method capable of controlling an amount of ventilation according to an amount of human activity in a room even when $CO_2$ concentration of outdoor air changes. Solution to Problem

According to the present invention, a ventilation apparatus and a ventilation control method as defined in the independent claims are provided.

Advantageous Effects of Invention

The ventilation apparatus according to an aspect of the present invention, the ventilation system according to an aspect of the present disclosure, and the ventilation control method according to an aspect of the present invention are configured to calculate the threshold on the basis of the $CO_2$ concentration of the air in the outdoor space, and set the amount of ventilation to be larger when the $CO_2$ concentration of the air in the indoor space is higher than or equal to the threshold than when the $CO_2$ concentration of the air in the indoor space is lower than the threshold. With this configuration, the amount of ventilation can be controlled according to an amount of human activity in the room even when the $CO_2$ concentration in the outdoor air changes.

Brief Description of Drawings

FIG. 1 is a schematic diagram illustrating a simplified configuration of a ventilation apparatus according to a first embodiment.

FIG. 2 is a block diagram illustrating a hardware configuration of a control device of the ventilation apparatus according to the first embodiment.

FIG. 3 is a block diagram illustrating a hardware configuration of a remote control of the ventilation apparatus according to the first embodiment.

FIG. 4 is a functional block diagram of the ventilation apparatus according to the first embodiment.

FIG. 5 is a flowchart related to processing of changing an operation mode of the ventilation apparatus according to the first embodiment.

FIG. 6 is a flowchart related to a ventilation operation of the ventilation apparatus according to the first embodiment.

FIG. 7 is an example of a lookup table illustrating a relationship between the operation mode and a correction value of an upper limit $CO_2$ concentration value stored in the ventilation apparatus according to the first embodiment.

FIG. 8 is a flowchart related to processing of controlling an amount of ventilation of the ventilation apparatus according to the first embodiment.

FIG. 9 is a set of graphs illustrating a relationship between each of $CO_2$ concentration of air in an indoor space, a supply air volume, an exhaust air volume, and an amount of human activity and time in a situation where the $CO_2$ concentration of air in an outdoor space is constant according to the ventilation apparatus of the first embodiment.

FIG. 10 is a flowchart related to a ventilation operation of a ventilation apparatus according to a second embodiment.

FIG. 11 is an example of a lookup table illustrating a relationship between the operation mode and a threshold correction value Wt stored in the ventilation apparatus according to the second embodiment.

FIG. 12 is a schematic diagram illustrating a simplified structure of a ventilation apparatus according to a third embodiment in a state where an air passage switch damper is moved to a position to close an opening and open an exhaust air passage.

FIG. 13 is a schematic diagram illustrating a simplified structure of the ventilation apparatus according to the third embodiment in a state where the air passage switch damper is moved to a position to open the opening and close the exhaust air passage.

Description of Embodiments

A ventilation apparatus and a ventilation control method according to embodiments of the present invention will be described with reference to the drawings. Note that the present invention is not limited only to the following embodiments, and modifications or omissions can be made without departing from the scope of the present invention as defined in the appended claims. It is also possible to appropriately combine configurations and additional configurations of the ventilation apparatus and the ventilation control method according to the embodiments and modifications.

First Embodiment.

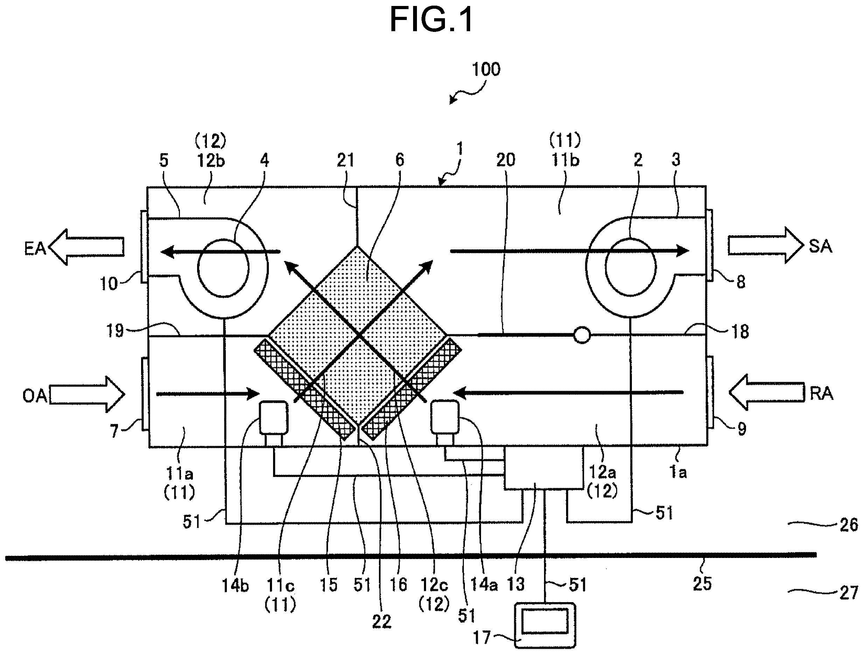

FIG. 1 is a schematic diagram illustrating a simplified configuration of a ventilation apparatus according to a first embodiment. Note that a reference character "OA" indicates outdoor air, a reference character "SA" indicates supply air, a reference character "RA" indicates return air, and a reference character "EA" indicates exhaust air.

A ventilation apparatus 100 will be described. The ventilation apparatus 100 includes a main body 1, a control device 13, and a remote control 17.

The main body 1 will now be described. The main body 1 is a heat exchange ventilation apparatus including a supply blower 3, an exhaust blower 5, and a heat exchange element 6 inside a housing 1a made of metal. The main body 1 is installed in an attic space 26. The remote control 17 is installed in an indoor space 27. In FIG. 1, a space above a ceiling 25 is the attic space 26, and a space below the ceiling 25 is the indoor space 27.

In the housing 1a, an outdoor air inlet 7, a supply air outlet 8, an indoor air inlet 9, and an exhaust air outlet 10 are formed. The outdoor air inlet 7 and the exhaust air outlet 10 are formed side by side on one surface of the housing 1a. The supply air outlet 8 and the indoor air inlet 9 are formed side by side on a surface facing the surface on which the outdoor air inlet 7 and the exhaust air outlet 10 are formed. Note that an outdoor air duct (not illustrated) is attached to the outdoor air inlet 7, and the outdoor air inlet 7 is connected to an outdoor space via the outdoor air duct. Note that the outdoor space is a space different from the indoor space 27 and the attic space 26. Moreover, a supply air duct (not illustrated) is attached to the supply air outlet 8, and the supply air outlet 8 is connected to the indoor space 27 via the supply air duct. Furthermore, a return air duct (not illustrated) is attached to the indoor air inlet 9, and the indoor air inlet 9 is connected to the indoor space 27 via the return air duct. Furthermore, an exhaust air duct (not illustrated) is attached to the exhaust air outlet 10, and the exhaust air outlet 10 is connected to the outdoor space via the exhaust air duct.

A supply air passage 11 connecting the outdoor air inlet 7 and the supply air outlet 8 via the heat exchange element 6 is formed inside the housing 1a. The supply air passage 11 is an air passage for supplying the outdoor air OA, which is the air in the outdoor space, to the indoor space 27. In the supply air passage 11, a section between the outdoor air inlet 7 and the heat exchange element 6 is referred to as a pre-heat exchange outdoor air passage 11a. Also, in the supply air passage 11, a section between the heat exchange element 6 and the supply air outlet 8 is referred to as a post-heat exchange outdoor air passage 11b. Furthermore, a section of the supply air passage 11 formed in the heat exchange element 6 is referred to as an intra-element supply air passage 11c.

An exhaust air passage 12 connecting the indoor air inlet 9 and the exhaust air outlet 10 via the heat exchange element 6 is formed inside the housing 1a. The exhaust air passage 12 is an air passage for exhausting the return air RA, which is the air in the indoor space 27, to the outdoor space. In the exhaust air passage 12, a section between the indoor air inlet 9 and the heat exchange element 6 is referred to as a pre-heat exchange indoor air passage 12a. Also, in the exhaust air passage 12, a section between the heat exchange element 6 and the exhaust air outlet 10 is referred to as a post-heat exchange indoor air passage 12b. Furthermore, a section of the exhaust air passage 12 formed in the heat exchange element 6 is referred to as an intra-element exhaust air passage 12c.

The supply blower 3 is provided in the supply air passage 11. The supply blower 3 is provided in the post-heat exchange outdoor air passage 11b in the supply air passage 11. The supply blower 3 includes an impeller that rotates to send air, and a supply motor 2 that rotates the impeller. When the supply motor 2 rotates the impeller, the supply blower 3 generates a flow of air from the outdoor air inlet 7 toward the supply air outlet 8 in the supply air passage 11. The flow of air from the outdoor air inlet 7 toward the supply air outlet 8 is referred to as a supply air flow. When the supply air flow is generated, the air in the outdoor space is drawn into the housing 1a through the outdoor air inlet 7 as the outdoor air OA. The drawn outdoor air OA passes through the inside of the supply air passage 11. The outdoor air OA having passed through the supply air passage 11 is blown out as the supply air SA from the supply air outlet 8 and supplied to the indoor space 27.

The exhaust blower 5 is provided in the exhaust air passage 12. The exhaust blower 5 is provided in the post-heat exchange indoor air passage 12b in the exhaust air passage 12. The exhaust blower 5 includes an impeller that rotates to send air, and an exhaust motor 4 that rotates the impeller. When the exhaust motor 4 rotates the impeller, the exhaust blower 5 generates a flow of air from the indoor air inlet 9 toward the exhaust air outlet 10 in the exhaust air passage 12. The flow of air from the indoor air inlet 9 toward the exhaust air outlet 10 is referred to as an exhaust air flow. When the exhaust air flow is generated, the air in the indoor space 27 is drawn into the housing 1a through the indoor air inlet 9 as the return air RA. The drawn return air RA passes through the inside of the exhaust air passage 12. The return air RA having passed through the exhaust air passage 12 is blown out as the exhaust air EA from the exhaust air outlet 10 and discharged to the outdoor space.

In the heat exchange element 6, the intra-element supply air passage 11c and the intra-element exhaust air passage 12c are formed independently of each other. Moreover, in the heat exchange element 6, total heat exchange is performed in which air flowing through the intra-element supply air passage 11c and air flowing through the intra-element exhaust air passage 12c exchange heat and moisture. Furthermore, in the heat exchange element 6, the intra-element supply air passage 11c and the intra-element exhaust air passage 12c are provided so as to be orthogonal to each other. Therefore, the direction of travel of the air flowing through the intra-element supply air passage 11c is orthogonal to the direction of travel of the air flowing through the intra-element exhaust air passage 12c. Examples of such a heat exchange element 6 include an element having a multilayer structure in which corrugated sheets each obtained by bonding corrugated paper to flat plate-like paper with heat conductivity and moisture permeability are alternately laminated with the orientation of corrugation of the corrugated paper shifted by 90 degrees.

The main body 1 includes two $CO_2$ sensors 14. Each of the $CO_2$ sensors 14 is a sensor that detects $CO_2$ concentration around the sensor.

One of the two $CO_2$ sensors 14 is provided in the exhaust air passage 12, specifically in the pre-heat exchange indoor air passage 12a in the exhaust air passage 12. The $CO_2$ sensor 14 provided in the exhaust air passage 12 is referred to as a first $CO_2$ sensor 14a. The first $CO_2$ sensor 14a detects the $CO_2$ concentration of the return air RA flowing through the exhaust air passage 12. Since the return air RA is the air in the indoor space 27 drawn into the housing 1a, the $CO_2$ concentration of the return air RA detected by the first $CO_2$ sensor 14a corresponds to the $CO_2$ concentration of the air in the indoor space 27. Thus, it can be restated that the first $CO_2$ sensor 14a detects the $CO_2$ concentration of the air in the indoor space 27.

Another one of the two $CO_2$ sensors 14 is provided in the supply air passage 11, specifically in the preheat exchange outdoor air passage 11a in the supply air passage 11. The $CO_2$ sensor 14 provided in the supply air passage 11 is referred to as a second $CO_2$ sensor 14b. The second $CO_2$ sensor 14b detects the $CO_2$ concentration of the outdoor air OA flowing through the supply air passage 11. Since the outdoor air OA is the air in the outdoor space drawn into the housing 1a, the $CO_2$ concentration of the outdoor air OA detected by the second $CO_2$ sensor 14b corresponds to the $CO_2$ concentration of the air in the outdoor space. Thus, it can be restated that the second $CO_2$ sensor 14b detects the $CO_2$ concentration of the air in the outdoor space.

The main body 1 further includes a supply air filter 15 and an exhaust air filter 16. The supply air filter 15 is installed upstream of the heat exchange element 6 in the supply air passage 11, that is, installed in the preheat exchange outdoor air passage 11a. The supply air filter 15 removes dust contained in the outdoor air OA and prevents a decrease in performance of the heat exchange element 6 due to clogging of the intra-element supply air passage 11c of the heat exchange element 6 by the dust. The exhaust air filter 16 is installed upstream of the heat exchange element 6 in the exhaust air passage 12, that is, installed in the pre-heat exchange indoor air passage 12a. The exhaust air filter 16 removes dust contained in the return air RA and prevents a decrease in performance of the heat exchange element 6 due to clogging of the intra-element exhaust air passage 12c of the heat exchange element 6 by the dust.

In addition, four partition walls 18, 19, 21, and 22 are provided inside the housing 1a. The post-heat exchange outdoor air passage 11b and the pre-heat exchange indoor air passage 12a are separated by the partition wall 18. Moreover, the pre-heat exchange outdoor air passage 11a and the post-heat exchange indoor air passage 12b are separated by the partition wall 19. Moreover, the post-heat exchange outdoor air passage 11b and the post-heat exchange indoor air passage 12b are separated by the partition wall 21. Moreover, the pre-heat exchange outdoor air passage 11a and the pre-heat exchange indoor air passage 12a are separated by the partition wall 22.

Also, in the partition wall 18, an opening 18a (not illustrated) that allows the post-heat exchange outdoor air passage 11b and the pre-heat exchange indoor air passage 12a to communicate with each other is formed in a region upstream of the supply blower 3 in the post-heat exchange outdoor air passage 11b, that is, a region between the heat exchange element 6 and the supply blower 3 in the post-heat exchange outdoor air passage 11b. Moreover, an air passage switch damper 20 for opening and closing the opening 18a is disposed in the opening 18a. In the first embodiment, the air passage switch damper 20 is disposed at a position to always close the opening 18a and open the exhaust air passage 12.

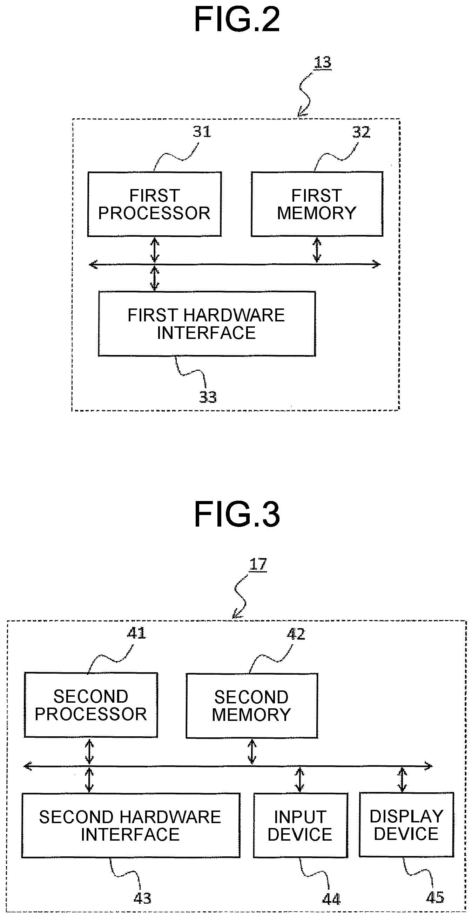

FIG. 2 is a block diagram illustrating a hardware configuration of the control device of the ventilation apparatus according to the first embodiment. Next, the control device 13 will be described. The control device 13 includes a first processor 31, a first memory 32, and a first hardware interface 33. The first processor 31, the first memory 32, and the first hardware interface 33 are communicably connected to one another.

The first processor 31 executes control of each hardware of the main body 1 such as the supply motor 2 and the exhaust motor 4, and executes data processing. The first processor 31 is, for example, a central processing unit (CPU).

The first memory 32 stores data. The first memory 32 is a non-volatile or volatile semiconductor memory such as a random access memory (RAM), a read only memory (ROM), a flash memory, an erasable programmable read only memory (EPROM), or an electrically erasable programmable read only memory (EEPROM).

The first processor 31 and the first memory 32 may also be integrated by using a microcontroller for the first processor 31 and the first memory 32. Moreover, a part of the first processor 31 may be implemented as an electronic circuit.

The first hardware interface 33 transmits and receives signals to and from another device different from the control device 13. The first hardware interface 33 includes, for example, a universal serial bus (USB) interface or a terminal block.

In the first embodiment, at least the supply motor 2, the exhaust motor 4, the first $CO_2$ sensor 14a, the second $CO_2$ sensor 14b, and the remote control 17 are communicably connected to the first hardware interface 33 via a communication line 51.

FIG. 3 is a block diagram illustrating a hardware configuration of the remote control of the ventilation apparatus according to the first embodiment. Next, the remote control 17 will be described. The remote control 17 includes a second processor 41, a second memory 42, a second hardware interface 43, an input device 44, and a display device 45. The second processor 41, the second memory 42, the second hardware interface 43, the input device 44, and the display device 45 are communicably connected to one another.

The second processor 41 executes control of each hardware of the remote control 17 such as the display device 45, and executes data processing. The second processor 41 is, for example, a CPU.

The second memory 42 stores data. The second memory 42 is a non-volatile or volatile semiconductor memory such as a RAM, a ROM, a flash memory, an EPROM, or an EEPROM.

The second processor 41 and the second memory 42 may also be integrated by using a microcontroller for the second processor 41 and the second memory 42. Moreover, a part of the second processor 41 may be implemented as an electronic circuit.

The second hardware interface 43 transmits and receives signals to and from another device different from the remote control 17. The second hardware interface 43 includes, for example, a USB interface or a terminal block. Also, the second hardware interface 43 is communicably connected to at least the control device 13 via the communication line 51.

The input device 44 is a device to which a user operating the ventilation apparatus 100 inputs an operation. The user's operation input to the input device 44 includes turning on or off of the ventilation apparatus 100, switching of an operation mode of the ventilation apparatus 100 described later, and the like. Moreover, for example, a push button switch or the like is used as the input device 44.

The display device 45 is a device that displays information to a user. The information displayed by the display device 45 includes, for example, an operation status of the ventilation apparatus 100. Also, for example, a liquid crystal display or the like is used as the display device 45.

The input device 44 and the display device 45 may also be integrated by using a touch panel for the input device 44 and the display device 45.

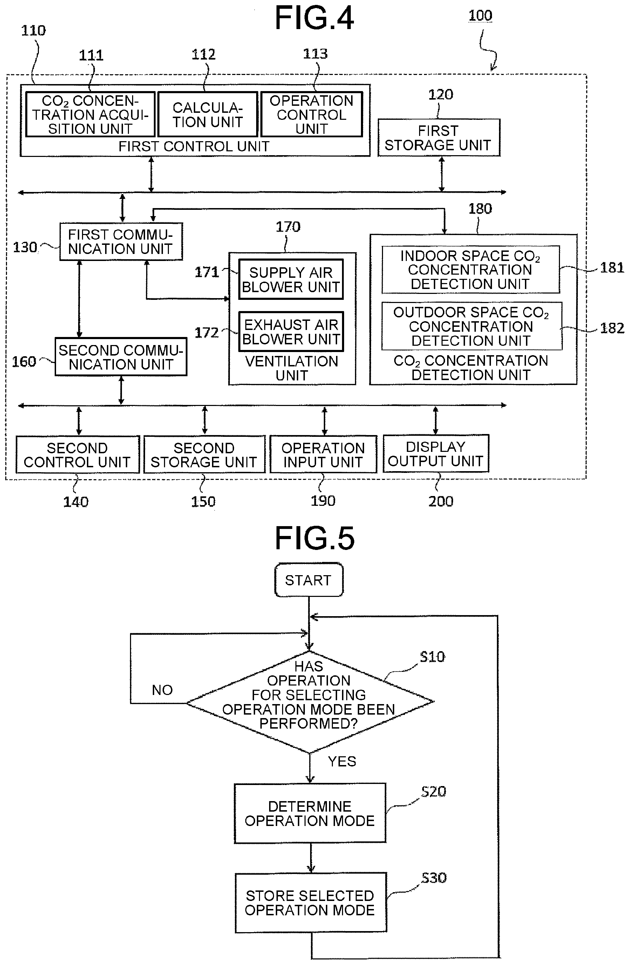

FIG. 4 is a functional block diagram of the ventilation apparatus according to the first embodiment. Next, the functional block diagram of the ventilation apparatus 100 will be described.

The ventilation apparatus 100 includes a first control unit 110, a first storage unit 120, a first communication unit 130, a second control unit 140, a second storage unit 150, a second communication unit 160, a ventilation unit 170, a $CO_2$ concentration detection unit 180, an operation input unit 190, and a display output unit 200. At least the first control unit 110, the first storage unit 120, and the first communication unit 130 are communicably connected to one another. In addition, at least the second control unit 140, the second storage unit 150, the second communication unit 160, the operation input unit 190, and the display output unit 200 are communicably connected to one another.

The first control unit 110 includes a $CO_2$ concentration acquisition unit 111, a calculation unit 112, and an operation control unit 113. Note that the $CO_2$ concentration acquisition unit 111, the calculation unit 112, and the operation control unit 113 are implemented by the first processor 31 executing various processings according to programs stored in the first memory 32.

The $CO_2$ concentration acquisition unit 111 acquires the $CO_2$ concentration of the air in the indoor space 27 and the $CO_2$ concentration of the air in the outdoor space from the $CO_2$ concentration detection unit 180.

The calculation unit 112 calculates an upper limit $CO_2$ concentration value Cup and a threshold T of the $CO_2$ concentration. Details of a method by which the calculation unit 112 calculates the upper limit $CO_2$ concentration value Cup and the threshold T will be described later.

The operation control unit 113 controls the operation of the ventilation apparatus 100 on the basis of various information. Details of the control performed by the operation control unit 113 will be described later.

The first storage unit 120 stores various information related to the operation of the ventilation apparatus 100. The first storage unit 120 stores at least the programs to be executed by the first processor 31. Details of the information stored in the first storage unit 120 other than the programs will be described later. Note that the first storage unit 120 is implemented by storing the information related to the operation of the ventilation apparatus 100 in the first memory 32.

The first communication unit 130 transmits and receives signals including information to and from the second communication unit 160, the ventilation unit 170, and the $CO_2$ concentration detection unit 180. Therefore, the first control unit 110 and the first storage unit 120 can exchange information with the second communication unit 160, the ventilation unit 170, and the $CO_2$ concentration detection unit 180 via the first communication unit 130. Note that the first communication unit 130 is implemented by the first hardware interface 33. Moreover, the transmission and reception of the signals between the first communication unit 130 and the second communication unit 160, the ventilation unit 170, and the $CO_2$ concentration detection unit 180 are implemented by the communication line 51.

The second control unit 140 controls an operation of the remote control 17. For example, the second control unit 140 controls the content of display on the display output unit 200 or makes a determination on information related to a user's operation input from the operation input unit 190. Note that the second control unit 140 is implemented by the second processor 41 executing various processings according to programs stored in the second memory 42.

The second storage unit 150 stores various information related to the remote control 17. The second storage unit 150 stores at least the programs to be executed by the second processor 41. In addition to the programs, the information stored in the second storage unit 150 includes, for example, information related to an image or a character to be displayed on the display output unit 200. Note that the second storage unit 150 is implemented by storing the information related to the remote control 17 in the second memory 42.

The second communication unit 160 transmits and receives signals including information to and from the first communication unit 130. Therefore, the second control unit 140, the second storage unit 150, the operation input unit 190, and the display output unit 200 can exchange information with the first communication unit 130 via the second communication unit 160. Note that the second communication unit 160 is implemented by the second hardware interface 43.

The ventilation unit 170 exchanges the air in the indoor space and the air in the outdoor space to ventilate the indoor space 27. The ventilation unit 170 includes a supply air blower unit 171 and an exhaust air blower unit 172.

The supply air blower unit 171 supplies the air in the outdoor space to the indoor space 27. The supply air blower unit 171 can also change a volume of the air in the outdoor space to be supplied to the indoor space 27. Hereinafter, the volume of the air in the outdoor space to be supplied to the indoor space 27 is referred to as a supply air volume Qsa.

The first embodiment assumes that the supply air volume Qsa can be changed to three levels of supply air volumes being a first supply air volume Qsa1, a second supply air volume Qsa2, and a third supply air volume Qsa3. The first supply air volume Qsa1 has the smallest air volume among the three levels of supply air volumes. The third supply air volume Qsa3 has the largest air volume among the three levels of supply air volumes. The second supply air volume Qsa2 has the air volume larger than the first supply air volume Qsa1 and smaller than the third supply air volume Qsa3. That is, a relationship of Qsa1<Qsa2<Qsa3 holds.

Moreover, the supply air blower unit 171 is implemented by the supply blower 3. In the first storage unit 120, an air volume of the supply blower 3 or a value related to the supply blower 3 for achieving each of the first supply air volume Qsa1, the second supply air volume Qsa2, and the third supply air volume Qsa3 is stored in association with a corresponding one of the supply air volumes Qsa1, Qsa2, and Qsa3. The value related to the supply blower 3 includes, for example, a rotational speed of the supply motor 2 or a value of current supplied to the supply motor 2. The supply air volume Qsa is changed by the first processor 31 changing the air volume of the supply blower 3 or the value related to the supply blower 3 to the air volume or the value stored in association with the corresponding supply air volume. Note that the larger the supply air volume Qsa, the larger the air volume of the supply blower 3, the faster the rotational speed of the supply motor 2, and the higher the value of current supplied to the supply motor 2.

The exhaust air blower unit 172 discharges the air in the indoor space 27 to the outdoor space. The exhaust air blower unit 172 can also change a volume of the air in the indoor space 27 to be discharged to the outdoor space. Hereinafter, the volume of the air in the indoor space to be discharged to the outdoor space is referred to as an exhaust air volume Qea.

The first embodiment assumes that the exhaust air volume Qea can be changed to three levels of exhaust air volumes being a first exhaust air volume Qea1, a second exhaust air volume Qea2, and a third exhaust air volume Qea3. The first exhaust air volume Qea1 has the smallest air volume among the three levels of exhaust air volumes. The third exhaust air volume Qea3 has the largest air volume among the three levels of exhaust air volumes. The second exhaust air volume Qea2 has the air volume larger than the first exhaust air volume Qea1 and smaller than the third exhaust air volume Qea3. That is, a relationship of Qea1<Qea2<Qea3 holds.

Moreover, the exhaust air blower unit 172 is implemented by the exhaust blower 5. Thus, in the first storage unit 120, an air volume of the exhaust blower 5 or a value related to the exhaust blower 5 for achieving each of the first exhaust air volume Qea1, the second exhaust air volume Qea2, and the third exhaust air volume Qea3 is stored in association with a corresponding one of the exhaust air volumes Qea1, Qea2, and Qea3. The value related to the exhaust blower 5 includes, for example, a rotational speed of the exhaust motor 4 or a value of current supplied to the exhaust motor 4. The exhaust air volume Qea is changed by the first processor 31 changing the air volume of the exhaust blower 5 or the value related to the exhaust blower 5 to the air volume or the value stored in association with the corresponding exhaust air volume. Note that the larger the exhaust air volume Qea, the larger the air volume of the exhaust blower 5, the faster the rotational speed of the exhaust motor 4, and the higher the value of current supplied to the exhaust motor 4.

The $CO_2$ concentration detection unit 180 detects the $CO_2$ concentration in the air. The $CO_2$ concentration detection unit 180 includes an indoor space $CO_2$ concentration detection unit 181 and an outdoor space $CO_2$ concentration detection unit 182.

The indoor space $CO_2$ concentration detection unit 181 detects the $CO_2$ concentration of the air in the indoor space 27. The indoor space $CO_2$ concentration detection unit 181 is implemented by the first $CO_2$ sensor 14a.

The outdoor space $CO_2$ concentration detection unit 182 detects the $CO_2$ concentration of the air in the outdoor space. The outdoor space $CO_2$ concentration detection unit 182 is implemented by the second $CO_2$ sensor 14b.

The operation input unit 190 receives information related to an operation from a user. The operation input unit 190 is implemented by the input device 44. Note that details of the information related to the operation input from the operation input unit 190 will be described later.

The display output unit 200 outputs information to a user by displaying an image, a character, or the like. The display output unit 200 is implemented by the display device 45.

Next, an operation mode of the ventilation apparatus 100 will be described. The ventilation apparatus 100 includes a plurality of operation modes. The ventilation apparatus 100 according to the first embodiment includes a first operation mode, a second operation mode, and a third operation mode. Under the same $CO_2$ con-

centration of the air in the outdoor space, the operation modes have different control values for the $CO_2$ concentration in the indoor space used to manage the $CO_2$ concentration in the indoor space. The first embodiment will describe a case where the upper limit $CO_2$ concentration value Cup is used as the control value for the $CO_2$ concentration in the indoor space.

Here, the upper limit $CO_2$ concentration value Cup will be described. The upper limit $CO_2$ concentration value Cup is a value set as an upper limit of the $CO_2$ concentration in the indoor space 27, and the ventilation apparatus 100 ventilates the indoor space 27 such that the value of the $CO_2$ concentration in the indoor space 27 does not exceed the upper limit $CO_2$ concentration value. Moreover, the upper limit $CO_2$ concentration value Cup of each operation mode changes depending on the $CO_2$ concentration of the air in the outdoor space. The change in the upper limit $CO_2$ concentration value Cup depending on the $CO_2$ concentration of the air in the outdoor space will be described later in detail.

Moreover, under the same $CO_2$ concentration of the air in the outdoor space, an upper limit $CO_2$ concentration value Cup1 of the first operation mode, an upper limit $CO_2$ concentration value Cup2 of the second operation mode, and an upper limit $CO_2$ concentration value Cup3 of the third operation mode satisfy a relationship of Cup3<Cup2<Cup1.

Therefore, in the first operation mode, the $CO_2$ concentration of the air in the indoor space 27 is higher than in the second operation mode and the third operation mode. That is, the first operation mode has higher $CO_2$ concentration of the air in the indoor space but a lower amount of ventilation and a reduced load of air conditioning, thereby saving energy.

In the third operation mode, the $CO_2$ concentration of the air in the indoor space 27 is lower than in the first operation mode and the second operation mode. That is, the third operation mode has a higher amount of ventilation and an increased load of air conditioning but lower $CO_2$ concentration of the air in the indoor space, so that work efficiency of a person who works in the indoor space 27 is improved.

In the second operation mode, the $CO_2$ concentration of the air in the indoor space 27 is lower than in the first operation mode and higher than in the third operation mode. That is, in the second operation mode, the $CO_2$ concentration of the air in the indoor space and the amount of ventilation are between those of the first operation mode and the third operation mode, so that energy saving and work efficiency are balanced.

Furthermore, a user can select one operation mode from the plurality of operation modes through the operation input unit 190 depending on the use environment of the ventilation apparatus 100. Here, the operation mode selected by the user is referred to as a selected operation mode.

FIG. 5 is a flowchart related to processing of changing the operation mode of the ventilation apparatus according to the first embodiment. Next, the processing of changing the operation mode of the ventilation apparatus will be described. Note that as a premise at the start of the flowchart of FIG. 5, it is assumed that a user has performed an operation for starting the operation of the ventilation apparatus 100 through the operation input unit 190. The operation for starting the operation of the ventilation apparatus 100 includes, for example, that the user presses a push button switch for starting the operation of the ventilation apparatus 100 provided in the input device 44.

In step S10, the second control unit 140 determines whether or not the user has performed an operation for selecting the operation mode through the operation input unit 190. The operation for selecting the operation mode by the user includes, for example, the user pressing a push button switch for selecting the operation mode of the ventilation apparatus 100 provided in the input device 44. If the second control unit 140 determines in step S10 that the user has not performed the operation for selecting the operation mode through the operation input unit 190 (No in S10), the processing of step S10 is performed again.

If the second control unit 140 determines in step S10 that the user has performed the operation for selecting the operation mode through the operation input unit 190 (Yes in S10), the processing proceeds to step S20. In step S20, the second control unit 140 determines the operation mode selected by the user through the operation input unit 190. The second control unit 140 determines the operation mode selected by the user from, for example, an operation procedure on the operation input unit 190 by the user. For example, in a case where the ventilation apparatus 100 is operated in the first operation mode, the second control unit 140 determines that the user has selected the second operation mode when the user presses a push button switch for changing the operation mode once, or determines that the user has selected the third operation mode when the user presses the push button switch for changing the operation mode twice.

After step S20 is completed, the processing proceeds to step S30. In step S30, the first storage unit 120 stores, as the selected operation mode, the operation mode changed by the user that has been determined by the second control unit 140. Note that in a case where the processing of step S30 is performed a plurality of times, the second storage unit 150 stores only the last operation mode changed by the user that has been determined by the second control unit 140 as the selected operation mode.

After step S30 is completed, the processing returns to step S10.

Note that the flowchart of FIG. 5 ends when the user has performed an operation for stopping the operation of the ventilation apparatus 100 through the operation input unit 190. The operation for stopping the operation of the ventilation apparatus 100 includes, for example, that the user presses a push button switch for stopping the operation of the ventilation apparatus 100 provided in the input device 44.

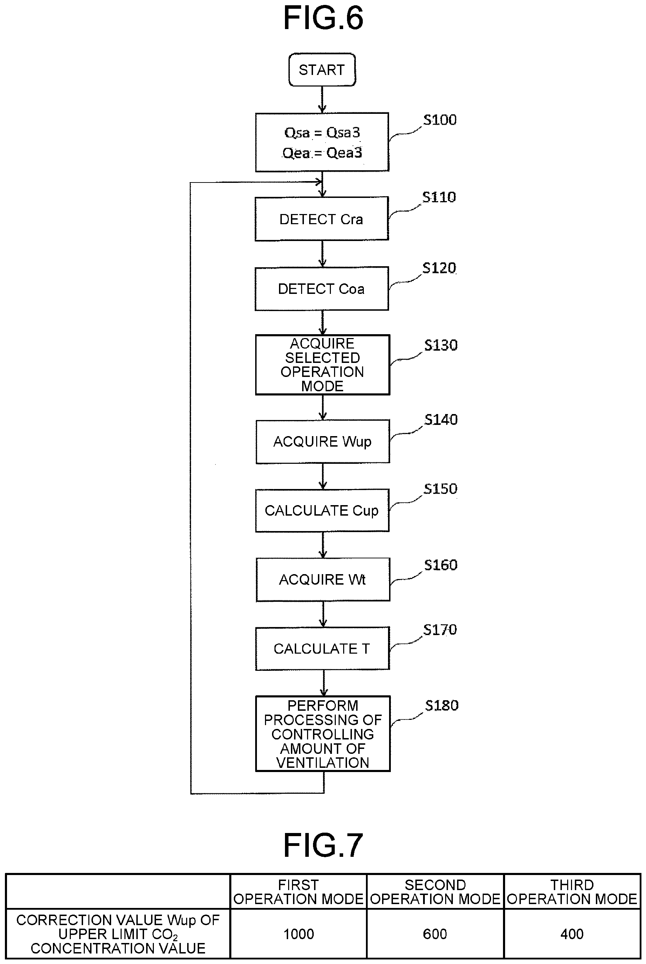

FIG. 6 is a flowchart related to a ventilation operation of the ventilation apparatus according to the first embodiment. Next, the ventilation operation of the ventilation apparatus 100 will be described. Note that as a premise at the start of the flowchart of FIG. 6, it is assumed that a user has performed an operation for starting the operation of the ventilation apparatus 100 through the operation input unit 190. It is also assumed that the processing in the flowchart related to the ventilation operation of FIG. 6 and the processing in the flowchart related to the processing of changing the operation mode of FIG. 5 are performed independently of each other.

In step S100, the operation control unit 113 starts the operation of the supply air blower unit 171 and the exhaust air blower unit 172. Also in step S100, the operation control unit 113 performs control such that the supply air volume Qsa is set to the third supply air volume Qsa3 and the exhaust air volume Qea is set to the third exhaust air volume Qea3.

The reason why the operation control unit 113 starts the operation of the supply air blower unit 171 and the exhaust air blower unit 172 in step S100 is as follows. The indoor space $CO_2$ concentration detection unit 181 is implemented by the first $CO_2$ sensor 14a disposed in the exhaust air passage 12. Therefore, in order for the indoor space $CO_2$ concentration detection unit 181 to detect the $CO_2$ concentration of the air in the indoor space 27 in step S110 described later, it is necessary to operate the exhaust air blower unit 172 to introduce the air in the indoor space 27 into the exhaust air passage 12. Moreover, the outdoor space $CO_2$ concentration detection unit 182 is implemented by the second $CO_2$ sensor 14b disposed in the supply air passage 11. Therefore, in order for the outdoor space $CO_2$ concentration detection unit 182 to detect the $CO_2$ concentration of the air in the outdoor space in step S120 described later, it is necessary to operate the supply air blower unit 171 to introduce the air in the outdoor space into the supply air passage 11.

Moreover, in step S100, the reason why the operation control unit 113 performs control such that the supply air volume Qsa is set to the third supply air volume Qsa3 and the exhaust air volume Qea is set to the third exhaust air volume Qea3 is as follows. While the supply air blower unit 171 and the exhaust air blower unit 172 are stopped, the air in the supply air passage 11 and the air in the exhaust air passage 12 are stagnant. In order to exchange the stagnant air in the supply air passage 11 with the air in the outdoor space in a short time, the supply air volume Qsa is set to the third supply air volume Qsa3 having the largest air volume. Also, in order to exchange the stagnant air in the exhaust air passage 12 with the air in the indoor space 27 in a short time, the exhaust air volume Qea is set to the third exhaust air volume Qea3 having the largest air volume.

After step S100 is completed, the processing proceeds to step S110. In step S110, the indoor space $CO_2$ concentration detection unit 181 detects $CO_2$ concentration Cra of the air in the indoor space 27. The $CO_2$ concentration Cra of the air in the indoor space 27 detected in step S110 is acquired as information by the $CO_2$ concentration acquisition unit 111.

After step S110 is completed, the processing proceeds to step S120. In step S120, the outdoor space $CO_2$ concentration detection unit 182 detects $CO_2$ concentration Coa of the air in the outdoor space. The $CO_2$ concentration Coa of the air in the outdoor space detected in step S120 is acquired as information by the $CO_2$ concentration acquisition unit 111.

After step S120 is completed, the processing proceeds to step S130. In step S130, the calculation unit 112 acquires the selected operation mode stored in the first storage unit 120. Note that the selected operation mode acquired in step S130 is the same as the operation mode selected by the user that is determined by the second control unit 140 and stored in step S30 of the flowchart in FIG. 5.

After step S130 is completed, the processing proceeds to step S140. In step S140, the calculation unit 112 acquires a correction value Wup of the upper limit $CO_2$ concentration value on the basis of the selected operation mode stored in the first storage unit 120 acquired in step S130, and a lookup table stored in the first storage unit 120 and indicating a relationship between the operation mode and the correction value Wup of the upper limit $CO_2$ concentration value. The correction value Wup of the upper limit $CO_2$ concentration value is a value used by the calculation unit 112 to calculate the upper limit $CO_2$ concentration value Cup. Note that as described above, since the upper limit $CO_2$ concentration value Cup corresponds to the control value for the $CO_2$ concentration in the indoor space, the correction value Wup of the upper limit $CO_2$ concentration value corresponds to a control-value correction value.

FIG. 7 is an example of the lookup table indicating the relationship between the operation mode and the correction value of the upper limit $CO_2$ concentration value stored in the ventilation apparatus according to the first embodiment. The lookup table indicating the relationship between the operation mode and the correction value Wup of the upper limit $CO_2$ concentration value will be described. First, the lookup table indicating the relationship between the operation mode and the correction value Wup of the upper limit $CO_2$ concentration value is stored in the first storage unit 120. Also, the lookup table indicating the relationship between the operation mode and the correction value Wup of the upper limit $CO_2$ concentration value stores the correction value Wup of the upper limit $CO_2$ concentration value associated with each operation mode. Moreover, the correction value Wup of the upper limit $CO_2$ concentration value is different for each operation mode associated.

In the lookup table illustrated in FIG. 7, a correction value Wup1 of the upper limit $CO_2$ concentration

value for the first operation mode is 1000 ppm, a correction value Wup2 of the upper limit $CO_2$ concentration value for the second operation mode is 600 ppm, and a correction value Wup3 of the upper limit $CO_2$ concentration value for the third operation mode is 400 ppm.

The description returns to the processing of step S140. For example, in a case where the selected operation mode stored in the first storage unit 120 is the first operation mode, the calculation unit 112 acquires information indicating that the correction value Wup of the upper limit $CO_2$ concentration value is 1000 ppm in step S140. Moreover, for example, in a case where the selected operation mode stored in the first storage unit 120 is the second operation mode, the calculation unit 112 acquires information indicating that the correction value Wup of the upper limit $CO_2$ concentration value is 600 ppm in step S140.

The description returns to the ventilation operation of the ventilation apparatus 100. After step S140 is completed, the processing proceeds to step S150. In step S150, the calculation unit 112 calculates the upper limit $CO_2$ concentration value Cup on the basis of the $CO_2$ concentration Coa of the air in the outdoor space detected by the outdoor space $CO_2$ concentration detection unit 182 in step S120, and the correction value Wup of the upper limit $CO_2$ concentration value acquired by the calculation unit 112 in step S140. In step S150, the upper limit $CO_2$ concentration value Cup is calculated by adding the correction value Wup of the upper limit $CO_2$ concentration value to the $CO_2$ concentration Coa of the air in the outdoor space (Cup=Coa+Wup).

For example, it is assumed that the selected operation mode stored in the first storage unit 120 is the first operation mode, and the $CO_2$ concentration Coa of the air in the outdoor space detected by the outdoor space $CO_2$ concentration detection unit 182 in step S120 is 400 ppm. In this case, the correction value Wup of the upper limit $CO_2$ concentration value acquired by the calculation unit 112 in step S140 is 1000 ppm, whereby the upper limit $CO_2$ concentration value Cup is 1400 ppm

$$(Cup=Coa+Wup=400+1000=1400).$$

Moreover, for example, it is assumed that the selected operation mode stored in the first storage unit 120 is the first operation mode, and the $CO_2$ concentration Coa of the air in the outdoor space detected by the outdoor space $CO_2$ concentration detection unit 182 in step S120 is 600 ppm. In this case, the correction value Wup of the upper limit $CO_2$ concentration value acquired by the calculation unit 112 in step S140 is 1000 ppm, whereby the upper limit $CO_2$ concentration value Cup is 1600 ppm

$$(Cup=Coa+Wup=600+1000=1600).$$

Moreover, for example, it is assumed that the selected operation mode stored in the first storage unit 120 is the second operation mode, and the $CO_2$ concentration Coa of the air in the outdoor space detected by the outdoor space $CO_2$ concentration detection unit 182 in step S120 is 400 ppm. In this case, the correction value Wup of the upper limit $CO_2$ concentration value acquired by the calculation unit 112 in step S140 is 600 ppm, whereby the upper limit $CO_2$ concentration value Cup is 1000 ppm (Cup=Coa+Wup=400+600=1000).

The description returns to the ventilation operation of the ventilation apparatus 100. After step S150 is completed, the processing proceeds to step S160. In step S160, the calculation unit 112 acquires a threshold correction value Wt stored in the first storage unit 120. The threshold correction value Wt is a value used by the calculation unit 112 to calculate a threshold T to be described later. Note that the ventilation apparatus 100 of the first embodiment has a plurality of the threshold correction values Wt including a first threshold correction value Wt1 and a second threshold correction value Wt2. Also, in the first embodiment, the first threshold correction value Wt1 is 200 ppm, and the second threshold correction value Wt2 is 300 ppm.

After step S160 is completed, the processing proceeds to step S170. In step S170, the calculation unit 112 calculates the threshold T on the basis of the upper limit $CO_2$ concentration value Cup calculated by the calculation unit 112 in step S150 and the threshold correction value Wt acquired by the calculation unit 112 in step S160. In step S170, the threshold T is calculated by subtracting the threshold correction value Wt from the upper limit $CO_2$ concentration value Cup (T=Cup-Wt). Also, in the first embodiment, the threshold correction value Wt includes the first threshold correction value Wt1 and the second threshold correction value Wt2, so that the threshold T calculated in step S170 also includes a first threshold T1 and a second threshold T2.

For example, it is assumed that the selected operation mode stored in the first storage unit 120 is the first operation mode, and the $CO_2$ concentration Coa of the air in the outdoor space detected by the outdoor space $CO_2$ concentration detection unit 182 in step S120 is 400 ppm. In this case, the upper limit $CO_2$ concentration value Cup calculated by the calculation unit 112 in step S150 is 1400 ppm, so that the first threshold T1 is 1200 ppm (T1=Cup-Wt1=1400-200=1200), and the second threshold T2 is 1100 ppm (T2=Cup-Wt2=1400-300=1100).

Moreover, for example, it is assumed that the selected operation mode stored in the first storage unit 120 is the first operation mode, and the $CO_2$ concentration Coa of the air in the outdoor space detected by the outdoor space $CO_2$ concentration detection unit 182 in step S120 is 600 ppm. In this case, the upper limit $CO_2$ concentration value Cup calculated by the calculation unit 112 in step S150 is 1600 ppm, so that the first threshold T1 is 1400 ppm (T1=Cup-Wt1=1600-200=1400), and the second threshold T2 is 1300 ppm (T2=Cup-Wt2=1600-300=1300).

As described above, under the same operation mode selected as the selected operation mode, the threshold T is higher when the $CO_2$ concentration Coa of the air in the outdoor space is high than when the $CO_2$ concentration Coa of the air in the outdoor space is low.

Moreover, for example, it is assumed that the selected operation mode stored in the first storage unit 120 is the second operation mode, and the $CO_2$ concentration Coa of the air in the outdoor space detected by the outdoor space $CO_2$ concentration detection unit 182 in step S120 is 400 ppm. In this case, the upper limit $CO_2$ concentration value Cup calculated by the calculation unit 112 in step S150 is 1000 ppm, so that the first threshold T1 is 800 ppm (T1=Cup-Wt1=1000-200=800), and the second threshold T2 is 700 ppm (T2=Cup-Wt2=1000-300=700).

As described above, under the same $CO_2$ concentration Coa of the air in the outdoor space, the threshold T is higher when the operation mode having the high upper limit $CO_2$ concentration value Cup is selected as the selected operation mode than when the operation mode having the low upper limit $CO_2$ concentration value Cup is selected as the selected operation mode.

The description returns to the ventilation operation of the ventilation apparatus 100. After step S170 is completed, the processing proceeds to step S180. In step S180, the ventilation apparatus 100 performs processing of controlling the amount of ventilation on the basis of the $CO_2$ concentration Cra of the air in the indoor space 27 detected by the indoor space $CO_2$ concentration detection unit 181 in step S110 and the threshold T calculated by the calculation unit 112 in step S170. Note that details of the processing of controlling the amount of ventilation by the ventilation apparatus 100 will be described later.

After step S180 is completed, the processing returns to step S110.

Note that as with the flowchart of FIG. 5, the flowchart of FIG. 6 ends when the user has performed an operation for stopping the operation of the ventilation apparatus 100 through the operation input unit 190.

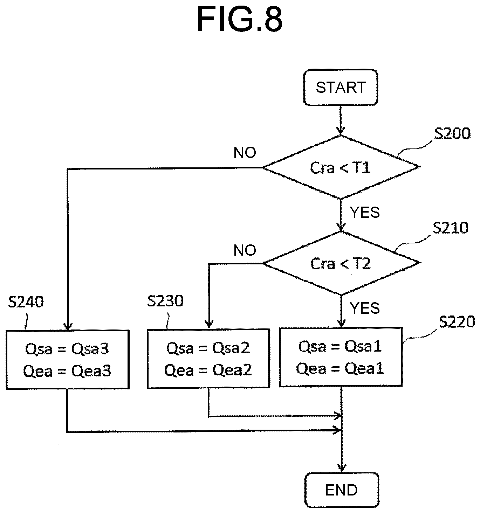

FIG. 8 is a flowchart related to the processing of controlling the amount of ventilation of the ventilation apparatus according to the first embodiment. Next, the processing of controlling the amount of ventilation by the ventilation apparatus 100 will be described. Note that as a premise at the start of the flowchart of FIG. 8, it is assumed that the processing of step S180 in FIG. 6 has been started.

In step S200, the operation control unit 113 determines whether or not the $CO_2$ concentration Cra of the air in the indoor space 27 detected by the indoor space $CO_2$ concentration detection unit 181 in step S110 is lower than the first threshold T1 calculated in step S170 (Cra<T1).

If the operation control unit 113 determines in step S200 that the $CO_2$ concentration Cra of the air in the indoor space 27 is lower than the first threshold T1 (Yes in step S200), the processing proceeds to step S210. In step S210, the operation control unit 113 determines whether or not the $CO_2$ concentration Cra of the air in the indoor space 27 detected by the indoor space $CO_2$ concentration detection unit 181 in step S110 is lower than the second threshold T2 calculated in step S170 (Cra<T2).

If the operation control unit 113 determines in step S210 that the $CO_2$ concentration Cra of the air in the indoor space 27 is lower than the second threshold T2 (Yes in step S210), the processing proceeds to step S220. In step S220, the operation control unit 113 controls the supply air blower unit 171 such that the supply air volume Qsa is set to the first supply air volume Qsa1, and controls the exhaust air blower unit 172 such that the exhaust air volume Qea is set to the first exhaust air volume Qea1.

If the operation control unit 113 determines in step S210 that the $CO_2$ concentration Cra of the air in the indoor space 27 is higher than or equal to the second threshold T2 (No in step S210), the processing proceeds to step S230. In step S230, the operation control unit 113 controls the supply air blower unit 171 such that the supply air volume Qsa is set to the second supply air volume Qsa2, and controls the exhaust air blower unit 172 such that the exhaust air volume Qea is set to the second exhaust air volume Qea2.

If the operation control unit 113 determines in step S200 that the $CO_2$ concentration Cra of the air in the indoor space 27 is higher than or equal to the first threshold T1 (No in step S200), the processing proceeds to step S240. In step S240, the operation control unit 113 controls the supply air blower unit 171 such that the supply air volume Qsa is set to the third supply air volume Qsa3, and controls the exhaust air blower unit 172 such that the exhaust air volume Qea is set to the third exhaust air volume Qea3.

After the processing in each of step S220, step S230, and step S240 is completed, the ventilation apparatus 100 ends the processing of controlling the amount of ventilation.

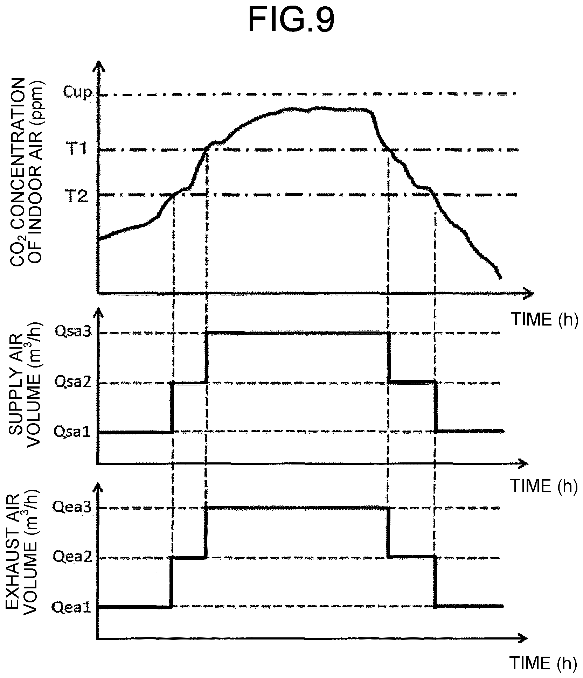

FIG. 9 is a set of graphs illustrating a relationship between each of the $CO_2$ concentration of the air in the indoor space, the supply air volume, the exhaust air volume, and the amount of human activity and time in a situation where the $CO_2$ concentration of the air in the outdoor space is constant according to the ventilation apparatus of the first embodiment. As illustrated in FIG. 9, when the $CO_2$ concentration Cra of the air in the indoor space is higher than or equal to the first threshold T1 (Cra≥T1), the supply air volume Qsa is set to the third supply air volume Qsa3, and the exhaust air volume Qea is set to the third exhaust air volume Qea3. Also, when the $CO_2$ concentration Cra of the air in the indoor space is lower than the first threshold T1 and higher than or equal to the second threshold T2 (T1>Cra≥T2), the supply air volume Qsa is set to the second supply air volume Qsa2, and the exhaust air volume Qea is set to the second exhaust air volume Qea2. Moreover, when the $CO_2$ concentration Cra of the air in the indoor space is lower than the second threshold T2 (T2>Cra), the supply air volume Qsa is set to the first supply air volume Qsa1, and the exhaust air volume Qea is set to the first exhaust air volume Qea1.

As described above, the first to third supply air volumes Qsa1, Qsa2, and Qsa3 satisfy the relationship of Qsa1<Qsa2<Qsa3, and the first to third exhaust air volumes Qea1, Qea2, and Qea3 satisfy the relationship of Qea1<Qea2<Qea3. Therefore, the amount of ventilation of the ventilation apparatus 100 when the $CO_2$ concentration Cra of the air in the indoor space 27 is higher than or equal to the first threshold T1 (Cra≥T1) is larger than the amount of ventilation of the ventilation apparatus 100 when the $CO_2$ concentration Cra of the air in the indoor space 27 is lower than the first threshold T1 (T1>Cra). Moreover, the amount of ventilation of the ventilation apparatus 100 when the $CO_2$ concentration Cra of the air in the indoor space 27 is higher than or equal to the second threshold T2 (Cra≥T2) is larger than the amount of ventilation of the ventilation apparatus 100 when the $CO_2$ concentration Cra of the air in the indoor space 27 is lower than the second threshold T2 (T2>Cra).

When the $CO_2$ concentration Coa of the air in the outdoor space increases or decreases, the first threshold T1 and the second threshold T2 also increase or decrease. Accordingly, the graphs indicating the relationship between each of the $CO_2$ concentration of the air in the indoor space 27, the ventilation air volume, and the exhaust air volume and time only change such that the value of the $CO_2$ concentration Cra of the air in the indoor space 27, the value of the first threshold T1, and the value of the second threshold T2 increase by the increase in the $CO_2$ concentration Coa of the air in the outdoor space, or the $CO_2$ concentration Cra of the air in the indoor space 27, the value of the first threshold T1, and the value of the second threshold T2 decrease by the decrease in the $CO_2$ concentration Coa of the air in the outdoor space, whereby the overall shapes of the graphs are substantially unchanged. As a result, even when the $CO_2$ concentration Coa of the air in the outdoor space increases or decreases, the shapes of the graphs of the supply air volume Qsa and the exhaust air volume Qea are substantially unchanged, and the amount of ventilation throughout the period in which the ventilation apparatus 100 is operated is substantially the same. Therefore, even when the $CO_2$ concentration Coa of the air in the outdoor space changes, it is possible to control the ventilation air volume according to the amount of human activity in the room.

Moreover, when the operation mode selected as the selected operation mode changes, the first threshold T1 and the second threshold T2 also change. As described above, the first threshold T1 or the second threshold T2 is higher as the operation mode having the higher

upper limit $CO_2$ concentration value Cup is selected as the selected operation mode. As a result, in the operation mode in which the upper limit $CO_2$ concentration value Cup is high, the $CO_2$ concentration Cra of the air in the indoor space is less likely to be higher than or equal to the first threshold T1 or higher than or equal to the second threshold T2 as compared to the operation mode in which the upper limit $CO_2$ concentration value Cup is low. Therefore, in the operation mode in which the upper limit $CO_2$ concentration value Cup is high, the period in which the operation is performed with a small amount of ventilation is longer than in the operation mode in which the upper limit $CO_2$ concentration value Cup is low. As a result, the amount of ventilation throughout the period in which the ventilation apparatus 100 is operated is smaller in the operation mode in which the upper limit $CO_2$ concentration value Cup is high than in the operation mode in which the upper limit $CO_2$ concentration value Cup is low.

As described above, the configuration of the ventilation apparatus 100 according to the first embodiment includes: the ventilation unit 170 that exchanges the air in the indoor space 27 and the air in the outdoor space, which is a space different from the indoor space 27, and ventilates the indoor space 27; the calculation unit 112 that calculates the threshold T on the basis of the $CO_2$ concentration Coa of the air in the outdoor space and the selected operation mode selected in advance from the plurality of operation modes; and the operation control unit 113 that controls the ventilation unit 170 such that the amount of ventilation is larger when the $CO_2$ concentration Cra of the air in the indoor space 27 is higher than or equal to the threshold T than when the $CO_2$ concentration Cra of the air in the indoor space 27 is lower than the threshold T. In this configuration, the threshold T is calculated on the basis of the $CO_2$ concentration Coa of the air in the outdoor space, so that the ventilation apparatus 100 according to the first embodiment has an effect of being able to control the ventilation air volume according to the amount of human activity in the room even when the $CO_2$ concentration Coa of the air in the outdoor space changes. Moreover, in this configuration, the threshold T is calculated on the basis of the selected operation mode selected in advance from the plurality of operation modes, so that the ventilation apparatus 100 according to the first embodiment has an effect of being able to perform ventilation according to characteristics of each operation mode such as improvement of work efficiency or energy saving.

The ventilation apparatus 100 according to the first embodiment of the invention further includes, a storage unit (corresponding to the first storage unit 120) that stores the correction values (corresponding to the correction values Wup of the upper limit $CO_2$ concentration value) associated with the plurality of operation modes, in which the correction value is different for each of the operation modes associated, and the calculation unit 112 calculates the threshold T on the basis of the $CO_2$ con-

centration Coa of the air in the outdoor space and the correction value associated with the operation mode selected as the selected operation mode. With this additional configuration, the ventilation apparatus 100 according to the first embodiment has an effect of being able to calculate, as a more appropriate value, the threshold for enabling ventilation according to the characteristics of each operation mode.

Furthermore, the ventilation apparatus 100 according to the first embodiment includes, as an additional configuration, the configuration in which the correction value is the control-value correction value (corresponding to the correction value Wup of the upper limit $CO_2$ concentration value) used to calculate the control value (corresponding to the upper limit $CO_2$ concentration value Cup) of the $CO_2$ concentration in the indoor space, and the calculation unit 112 calculates the control value for the $CO_2$ concentration in the indoor space on the basis of the $CO_2$ concentration Coa of the air in the outdoor space and the control-value correction value associated with the operation mode selected as the selected operation mode, and calculates the threshold T on the basis of the calculated control value for the $CO_2$ concentration in the indoor space. With this additional configuration, the ventilation apparatus 100 according to the first embodiment has an effect of being able to calculate, as a more appropriate value, the threshold for enabling ventilation according to the characteristics of each operation mode.

Furthermore, as an additional configuration, the ventilation apparatus 100 according to the first embodiment includes the configuration in which, under the same $CO_2$ concentration Coa of the air in the outdoor space, the threshold is calculated to be a higher value when the operation mode in which the control value (corresponding to the upper limit $CO_2$ concentration value Cup) for the $CO_2$ concentration in the indoor space is high is selected as the selected operation mode than when the operation mode in which the control value for the $CO_2$ concentration in the indoor space is low is selected as the selected operation mode. With this additional configuration, the ventilation apparatus 100 according to the first embodiment has an effect of being able to perform operation according to the characteristics of each operation mode such as decreasing the control value for the $CO_2$ concentration in the indoor space and decreasing the threshold in the operation mode for the purpose of improving work efficiency, or increasing the control value for the $CO_2$ concentration in the indoor space and increasing the threshold in the operation mode for the purpose of energy saving.

Furthermore, as an additional configuration, the ventilation apparatus 100 according to the first embodiment includes the configuration in which, under the same operation mode selected as the selected operation mode, the threshold T is calculated to be a higher value when the $CO_2$ concentration Coa of the air in the outdoor space is high than when the $CO_2$ concentration Coa of

the air in the outdoor space is low. With this additional configuration, the ventilation apparatus 100 according to the first embodiment has an effect of being able to control the ventilation air volume according to the amount of human activity in the room even when the $CO_2$ concentration Coa of the air in the outdoor space changes.

Furthermore, the ventilation apparatus 100 according to the first embodiment includes, as an additional configuration, the operation input unit 190 that receives the information related to the operation from the user, and the selected operation mode is selected on the basis of the information related to the operation from the user input to the operation input unit 190. With this additional configuration, the ventilation apparatus 100 according to the first embodiment has an effect that the user can freely determine the selected operation mode. In particular, as compared to a case where the selected operation mode is automatically determined, there is an effect that the user can select the operation mode depending on a condition of the indoor space 27 where the ventilation apparatus 100 performs ventilation or the like. For example, it is assumed that the indoor space 27 where the ventilation apparatus 100 performs ventilation is a conference room. When the conference room is in use, the amount of human activity in the conference room is higher than when the conference room is not in use, and it is desirable to lower the $CO_2$ concentration of the air in the conference room to improve the work efficiency. When the conference room is not in use, the amount of human activity in the conference room is lower than when the conference room is in use, and it is desirable to perform ventilation while saving energy. As just described, even when the performance required of the ventilation apparatus changes depending on the usage of the indoor space 27, the ventilation apparatus 100 according to the first embodiment has an effect of being able to achieve the performance required of the ventilation apparatus by the user selecting the operation mode according to the usage of the indoor space 27 with the additional configuration. Furthermore, in a case where the indoor space 27 where the ventilation apparatus 100 performs ventilation is a warehouse, the amount of human activity is lower than when the indoor space 27 where the ventilation apparatus 100 performs ventilation is an office, and it is thus desirable to perform ventilation while saving energy. Even when the performance required of the ventilation apparatus changes depending on the installation location of the ventilation apparatus 100 as described above, the ventilation apparatus 100 according to the first embodiment has an effect of being able to achieve the performance required of the ventilation apparatus by the user selecting the operation mode according to the installation location of the indoor space 27 with the additional configuration.

Moreover, as described above, the ventilation control method according to the first embodiment includes: a first step (corresponding to step S110) of acquiring the $CO_2$ concentration Cra of the air in the indoor space 27; a second step (corresponding to step S120) of acquiring the $CO_2$ concentration Coa of the air in the outdoor space; a third step (corresponding to step S130) of acquiring the selected operation mode selected in advance from the plurality of operation modes; a fourth step (corresponding to steps S140 to S170) of calculating the threshold T on the basis of the $CO_2$ concentration Coa of the air in the outdoor space acquired in the second step and the selected operation mode acquired in the third step; and a fifth step (corresponding to step S180) of controlling the amount of ventilation on the basis of the $CO_2$ concentration Cra in the indoor space 27 acquired in the first step and the threshold T calculated in the fourth step, in which the amount of ventilation controlled in the fifth step is controlled to a larger amount when the $CO_2$ concentration Cra in the indoor space 27 acquired in the first step is higher than or equal to the threshold T calculated in the fourth step than when the $CO_2$ concentration Cra in the indoor space acquired in the first step is lower than the threshold T calculated in the fourth step. In this configuration, the threshold T is calculated on the basis of the $CO_2$ concentration Coa of the air in the outdoor space, so that the ventilation control method according to the first embodiment has an effect of being able to control the ventilation air volume according to the amount of human activity in the room even when the $CO_2$ concentration Coa of the air in the outdoor space changes. Moreover, in this configuration, the threshold T is calculated on the basis of the selected operation mode selected in advance from the plurality of operation modes, so that the ventilation control method according to the first embodiment has an effect of being able to perform ventilation according to the characteristics of each operation mode such as improvement of work efficiency or energy saving.

Furthermore, as an additional configuration, the ventilation control method according to the first embodiment includes the configuration in which, in the fourth step, the correction value (corresponding to the correction value Wup of the upper limit $CO_2$ concentration value) associated with the operation mode selected as the selected operation mode acquired in the third step is acquired (corresponding to step S140), and the threshold T is calculated on the basis of the $CO_2$ concentration Coa of the air in the outdoor space acquired in the second step and the correction value acquired (corresponding to steps S150 to S170). With this additional configuration, the ventilation control method according to the first embodiment has an effect of being able to calculate, as a more appropriate value, the threshold for enabling ventilation according to the characteristics of each operation mode.

Furthermore, the ventilation control method according to the first embodiment includes, as an additional configuration, the configuration in which the correction value acquired in the fourth step is the control-value correction value (corresponding to the correction value Wup of the upper limit $CO_2$ concentration value) used to calculate the control value (corresponding to the upper limit $CO_2$ concentration value Cup) of the $CO_2$ concentration in the indoor space, and, in the fourth step, the control value for the $CO_2$ concentration in the indoor space is calculated on the basis of the $CO_2$ concentration Coa of the air in the outdoor space and the control-value correction value associated with the operation mode selected as the selected operation mode (corresponding to step S150), and the threshold T is calculated on the basis of the calculated control value for the $CO_2$ concentration in the indoor space (corresponding to steps S160 and S170). With this additional configuration, the ventilation control method according to the first embodiment has an effect of being able to calculate, as a more appropriate value, the threshold for enabling ventilation according to the characteristics of each operation mode.

Furthermore, as an additional configuration, the ventilation control method according to the first embodiment includes the configuration in which, under the same $CO_2$ concentration Coa of the air in the outdoor space, the threshold T calculated in the fourth step is a higher value when the operation mode in which the control value (corresponding to the upper limit $CO_2$ concentration value Cup) for the $CO_2$ concentration in the indoor space is high is selected as the selected operation mode than when the operation mode in which the control value for the $CO_2$ concentration in the indoor space is low is selected as the selected operation mode. With this additional configuration, the ventilation control method according to the first embodiment has an effect of being able to perform operation according to the characteristics of each operation mode such as decreasing the control value for the $CO_2$ concentration in the indoor space and decreasing the threshold in the operation mode for the purpose of improving work efficiency, or increasing the control value for the $CO_2$ concentration in the indoor space and increasing the threshold in the operation mode for the purpose of energy saving.

Furthermore, as an additional configuration, the ventilation control method according to the first embodiment includes the configuration in which, under the same operation mode selected as the selected operation mode, the threshold T calculated in the fourth step is a higher value when the $CO_2$ concentration Coa of the air in the outdoor space is high than when the $CO_2$ concentration Coa of the air in the outdoor space is low. With this additional configuration, the ventilation control method according to the first embodiment has an effect of being able to control the ventilation air volume according to the amount of human activity in the room even when the $CO_2$ concentration Coa of the air in the outdoor space changes.

Furthermore, as an additional configuration, the ventilation control method according to the first embodiment includes a sixth step (corresponding to step S30) of receiving the information related to the operation from the user, and storing one operation mode among the plurality of operation modes as the selected operation mode on the basis of the information related to the operation from the user. With this additional configuration, the ventilation control method according to the first embodiment has an effect that the user can freely determine the selected operation mode. In particular, as compared to a case where the selected operation mode is automatically determined, there is an effect that the user can select the operation mode depending on a condition of the indoor space 27 where ventilation is performed or the like.

A modification of the first embodiment will be described.

The ventilation apparatus 100 according to the first embodiment includes the supply blower 3, the exhaust blower 5, the supply air passage 11, and the exhaust air passage 12 to perform both supplying the air and exhausting the air, but is not limited thereto. The ventilation apparatus 100 need only perform at least any one of supplying the air or exhausting the air. For example, even in a case where the ventilation apparatus includes only the exhaust blower and the exhaust air passage, the pressure in the indoor space becomes lower than the pressure in the outdoor space due to the ventilation apparatus exhausting the air, so that the indoor space is ventilated as the air in the outdoor space flows into the indoor space.

However, in a case where the ventilation apparatus performs only one of supplying the air or exhausting the air, the supply air amount and the exhaust air amount cannot be set to substantially the same amount. In a case where a building has low airtightness, it is difficult to secure a ventilation path and to perform planned ventilation unless the supply air amount and the exhaust air amount can be set to substantially the same amount. In addition, even in a case where the building is highly airtight, if the supply air amount and the exhaust air amount cannot be set to substantially the same amount, the pressure in the indoor space and the pressure in the outdoor space are different from each other, which causes a problem such as difficulty in opening and closing a door. The ventilation apparatus 100 according to the first embodiment includes, as an additional configuration, the housing 1a in which the exhaust air passage 12 for discharging the air in the indoor space 27 to the outdoor space and the supply air passage 11 for supplying the air in the outdoor space to the indoor space 27 are formed, and the ventilation unit 170 includes the exhaust blower 5 provided inside the exhaust air passage 12 and the supply blower 3 provided inside the supply air passage 11. With this additional configuration, the ventilation apparatus 100 according to the first embodiment has an effect of being able to set the supply air amount and the exhaust air amount to substantially the same amount.

The ventilation apparatus 100 according to the first embodiment includes the first $CO_2$ sensor 14a that detects the $CO_2$ concentration of the air in the indoor space 27 and the second $CO_2$ sensor 14b that detects the $CO_2$ concentration of the air in the outdoor space, but is not limited thereto. Without including one or both of the first $CO_2$ sensor 14a and the second $CO_2$ sensor 14b, the ventilation apparatus may be configured to be communicably connected to a $CO_2$ sensor that is separate from the ventilation apparatus and disposed in the indoor space or a $CO_2$ sensor that is separate from the ventilation apparatus and disposed in the outdoor space. In the case of this configuration, it is not necessary to operate the exhaust blower 5 for detecting the $CO_2$ concentration in the indoor air or operate the supply blower 3 for detecting the $CO_2$ concentration in the outdoor air, so that it is possible to reduce the operation time of the ventilation apparatus and achieve an effect of saving energy of the ventilation apparatus itself or an air conditioner.

However, in the case where the $CO_2$ sensor is provided separately from the ventilation apparatus, there arises a problem in that it is necessary to perform work of communicably connecting the ventilation apparatus and the $CO_2$ sensor and work of adjusting the operation of the ventilation apparatus and the $CO_2$ sensor when the ventilation apparatus or the $CO_2$ sensor is installed. The ventilation apparatus 100 according to the first embodiment includes, as an additional configuration, the $CO_2$ concentration detection unit 180 that detects the $CO_2$ concentration of the air in the outdoor space and the $CO_2$ concentration of the air in the indoor space 27. The ventilation apparatus 100 according to the first embodiment further includes, as an additional configuration, the first $CO_2$ sensor 14a that detects the $CO_2$ concentration of the air in the indoor space 27 and the second $CO_2$ sensor 14b that detects the $CO_2$ concentration of the air in the outdoor space, the first $CO_2$ sensor 14a being provided inside the exhaust air passage 12, and the second $CO_2$ sensor 14b being provided inside the supply air passage 11. With these additional configurations, the ventilation apparatus 100 of the first embodiment has an effect of reducing the number of operations at the time of installation.

Furthermore, the ventilation apparatus 100 according to the first embodiment includes the first control unit 110, the first storage unit 120, the second control unit 140, and the second storage unit 150, but is not limited thereto. For example, the processing performed by the first control unit 110 and the processing performed by the second control unit 140 may be performed by one control unit. Moreover, the information stored in the first storage unit 120 and the information stored in the second storage unit 150 may be stored in one storage unit.

Furthermore, the ventilation apparatus 100 according to the first embodiment uses the upper limit $CO_2$ concentration value Cup as the control value for the $CO_2$ concentration in the indoor space, but is not limited thereto. The control value for the $CO_2$ concentration in the indoor space is a value used by the ventilation apparatus 100 to manage the $CO_2$ concentration in the indoor space, and another value may be used as long as the value is calculated on the basis of the $CO_2$ concentration in the outdoor air. For example, a target value of the $CO_2$

concentration in the indoor space may be used as the control value for the $CO_2$ concentration in the indoor space, and the threshold T may be calculated from the target value of the $CO_2$ concentration in the indoor space. In this case, the target value of the $CO_2$ concentration in the indoor space is obtained from the $CO_2$ concentration of the air in the outdoor space and the correction value associated with each operation mode. Moreover, the correction value associated with each operation mode is different for each operation mode, and the target value of the $CO_2$ concentration in the indoor space is also different for each operation mode.

Furthermore, as the operation for selecting the operation mode by the user, the ventilation apparatus 100 according to the first embodiment includes the operation in which the user presses the push button switch for selecting the operation mode of the ventilation apparatus 100 provided in the input device 44, but is not limited thereto. The ventilation apparatus may be configured to select an appropriate operation mode on the basis of information input by the user. For example, the user may input the upper limit $CO_2$ concentration value Cup of his choice, and the ventilation apparatus may select the operation mode on the basis of the upper limit $CO_2$ concentration value Cup that has been input. Note that the information input by the user corresponds to the information related to the operation from the user.

Furthermore, in the ventilation apparatus 100 according to the first embodiment, the three operation modes being the first operation mode, the second operation mode, and the third operation mode are set, but not limited to this. At least two or more types of modes may be set as the operation mode.

Moreover, the operation mode may be set for each control value that can be input by the user. For example, it is assumed that the user can select the upper limit $CO_2$ concentration value Cup in a total of seven levels from 800 ppm to 1400 ppm in increments of 100 ppm through the input device of the ventilation apparatus. In this case, the ventilation apparatus includes a total of seven operation modes from the operation mode when 800 ppm is selected as the upper limit $CO_2$ concentration to the operation mode when 1400 ppm is selected as the upper limit $CO_2$ concentration. In a case where the user selects 1000 ppm as the upper limit $CO_2$ concentration value Cup, the operation mode when 1000 ppm is selected as the upper limit $CO_2$ concentration is selected as the selected operation mode. That is, by selecting the upper limit $CO_2$ concentration value Cup selected by the user, the selected operation mode is selected from the plurality of operation modes. Also, in this case, the threshold T is calculated on the basis of the upper limit $CO_2$ concentration value Cup selected by the user. That is, between a case where the user selects 1000 ppm as the upper limit $CO_2$ concentration value Cup and a case where the user selects 1400 ppm as the upper limit $CO_2$ concentration value Cup, the value T is calculated to be a higher value in the latter case.

As with the ventilation apparatus 100 of the first embodiment, a configuration of the ventilation apparatus according to the modification of the first embodiment also includes: a ventilation unit that exchanges air in an indoor space and air in an outdoor space, which is a space different from the indoor space, and ventilates the indoor space; a calculation unit that calculates a threshold on the basis of the $CO_2$ concentration of the air in the outdoor space and the selected operation mode selected in advance from the plurality of operation modes; and an operation control unit that controls the ventilation unit such that the amount of ventilation is larger when the $CO_2$ concentration of the air in the indoor space is higher than or equal to the threshold T than when the $CO_2$ concentration of the air in the indoor space is lower than the threshold.

Furthermore, as an additional configuration, the ventilation apparatus according to the modification of the first embodiment includes a configuration in which the information related to the operation from the user is information for selecting the control value for the $CO_2$ concentration in the indoor space, the operation mode is a mode for performing operation corresponding to each control value for the $CO_2$ concentration in the indoor space, and the selected operation mode is an operation mode selected for performing operation corresponding to the selected control value for the $CO_2$ concentration in the indoor space. With this additional configuration, the ventilation apparatus according to the modification of the first embodiment has an effect that the user can determine the control value for the $CO_2$ concentration in the indoor space.

Moreover, as with the ventilation control method of the first embodiment, a ventilation control method according to the modification of the first embodiment also includes: the first step of acquiring the $CO_2$ concentration of the air in the indoor space; the second step of acquiring the $CO_2$ concentration of the air in the outdoor space; the third step of acquiring the selected operation mode selected in advance from the plurality of operation modes; the fourth step of calculating the threshold on the basis of the $CO_2$ concentration of the air in the outdoor space acquired in the second step and the selected operation mode acquired in the third step; and the fifth step of controlling the amount of ventilation on the basis of the $CO_2$ concentration in the indoor space acquired in the first step and the threshold calculated in the fourth step, in which the amount of ventilation controlled in the fifth step is controlled to a larger amount when the $CO_2$ concentration in the indoor space acquired in the first step is higher than or equal to the threshold calculated in the fourth step than when the $CO_2$ concentration in the indoor space acquired in the first step is lower than the threshold calculated in the fourth step.

Furthermore, as an additional configuration, the ventilation control method according to the modification of the first embodiment includes the configuration in which the operation mode is a mode for performing operation corresponding to each control value for the $CO_2$ concentration in the indoor space, the control value for the $CO_2$ concentration in the indoor space is selected by the user, and, in the sixth step, the operation mode for performing operation corresponding to the control value for the $CO_2$ concentration in the indoor space selected by the user is stored as the selected operation mode. With this additional configuration, the ventilation control method according to the modification of the first embodiment has an effect that the user can determine the control value for the $CO_2$ concentration in the indoor space.

Furthermore, the ventilation apparatus 100 according to the first embodiment includes two types of the threshold T being the first threshold T1 and the second threshold T, but is not limited thereto. For example, the threshold T may include only one type. Alternatively, the threshold T may include three or more types.

Furthermore, the ventilation apparatus 100 according to the first embodiment calculates the upper limit $CO_2$ concentration value Cup by adding the correction value Wup of the upper limit $CO_2$ concentration value to the $CO_2$ concentration Coa of the air in the outdoor space, but is not limited thereto. For example, a predetermined upper limit Cupmax of the upper limit $CO_2$ concentration may be stored in the storage unit, and when the calculated upper limit $CO_2$ concentration value Cup exceeds the upper limit Cupmax of the upper limit $CO_2$ concentration (Cup>Cupmax), the upper limit $CO_2$ concentration value Cup may be set as the upper limit Cupmax (Cup=Cupmax). Resetting may be performed in such a manner that the upper limit $CO_2$ concentration value Cup at the time of calculating the threshold T does not exceed the upper limit Cupmax of the upper limit $CO_2$ concentration.

Moreover, the storage unit may store a predetermined reference value Coar for the $CO_2$ concentration of the air in the outdoor space and a predetermined reference value Cupr for the upper limit $CO_2$ concentration value, and the calculation unit may calculate the upper limit $CO_2$ concentration value Cup and the threshold T from a difference between the reference value Coar for the $CO_2$ concentration of the air in the outdoor space and the actual $CO_2$ concentration Coa in the outdoor air detected by the $CO_2$ concentration detection unit, and the reference value Cupr for the upper limit $CO_2$ concentration value. In this case, for example, when the difference between the reference value Coar for the $CO_2$ concentration of the air in the outdoor space and the actual $CO_2$ concentration Coa of the outdoor air detected by the $CO_2$ concentration detection unit is 100 ppm with the actual $CO_2$ concentration Coa of the outdoor air being higher, the calculation unit calculates a value obtained by adding 100 ppm to the reference value Cupr for the upper limit $CO_2$ concentration value as the upper limit $CO_2$ concentration value Cup. The calculation unit further calculates the threshold T on the basis of the calculated upper limit $CO_2$ concentration value Cup.

Furthermore, in the ventilation apparatus 100 according to the first embodiment, both the first threshold T1 and the second threshold T2 are changed by changing the upper limit $CO_2$ concentration value Cup, but not limited to this. It is sufficient if at least one threshold is changed by changing the upper limit $CO_2$ concentration value Cup. For example, the first threshold T1 may be calculated by subtracting the threshold correction value Wt from the upper limit $CO_2$ concentration value Cup, and the second threshold T2 may be a constant value regardless of the upper limit $CO_2$ concentration value Cup.

Furthermore, the ventilation apparatus 100 according to the first embodiment calculates the threshold T by subtracting the threshold correction value Wt from the upper limit $CO_2$ concentration value Cup, but is not limited thereto. For example, the ventilation apparatus may store in advance a threshold correction coefficient set to an arbitrary value less than 1, and may calculate the threshold by multiplying the upper limit $CO_2$ concentration value Cup by the threshold correction coefficient.

Furthermore, in the ventilation apparatus 100 according to the first embodiment, the threshold correction value Wt is a constant but is not limited thereto. For example, the ventilation apparatus may store a lookup table indicating a relationship between the operation mode and an arbitrary constant, acquire the arbitrary constant related to the operation mode selected as the selected operation mode, multiply or add the acquired constant and the predetermined threshold correction value Wt, and set the value obtained by the multiplication or addition as a new threshold correction value. In this case, the threshold T is calculated by subtracting the new threshold correction value from the upper limit $CO_2$ concentration value Cup. Note that the arbitrary constant is determined by an action such as a designer storing a predetermined value in advance, for example, or a user inputting the value through the operation input unit.

Furthermore, in the ventilation apparatus 100 according to the first embodiment, the supply air volume Qsa is set to the first to third exhaust air volumes Qsa1, Qsa2, and Qsa3, and the exhaust air volume Qea is set to the first to third supply air volumes Qea1, Qea2, and Qea3, but not limited to this. It is sufficient if the supply air volume Qsa and the exhaust air volume Qea are each set to at least two or more types of air volumes.

Furthermore, the ventilation apparatus 100 according to the first embodiment controls the ventilation unit such that the exhaust air volume and the supply air volume are larger when the $CO_2$ concentration of the air in the indoor space is higher than or equal to the threshold than when the $CO_2$ concentration of the air in the indoor space is lower than the threshold, but is not limited thereto. The ventilation apparatus need only control the ventilation unit such that the amount of ventilation is larger when the $CO_2$ concentration of the air in the indoor space is higher than or equal to the threshold than when the $CO_2$ concentration of the air in the indoor space is lower than the threshold. For example, the ventilation unit may perform an intermittent operation that repeats running and stopping at certain time intervals, and the operation control unit may perform control such that the time for which the ventilation unit is stopped is shorter when the $CO_2$ concentration of the air in the indoor space is higher than or equal to the threshold than when the $CO_2$ concentration of the air in the indoor space is lower than the threshold, without changing the exhaust air volume and the supply air volume at the time the ventilation unit is up and running.

Furthermore, the ventilation apparatus 100 according to the first embodiment implements the configuration of the functional block diagram illustrated in FIG. 4 by one ventilation apparatus 100 but is not limited thereto. It may be a ventilation system in which the configuration of the functional block diagram illustrated in FIG. 4 is implemented by a plurality of devices. Note that processing of changing the operation mode, a ventilation operation, and processing of controlling the amount of ventilation of the ventilation system according to the modification of the first embodiment are similar to the processing of changing the operation mode, the ventilation operation, and the processing of controlling the amount of ventilation of the ventilation apparatus 100 described in the first embodiment.

Such a ventilation system of the modification includes, for example, a ventilation system implemented by a plurality of devices as described below. The supply air blower unit 171 is implemented by a ventilation fan for supplying air. Also, the exhaust air blower unit 172 is implemented by a ventilation fan for exhausting air. Moreover, the indoor space $CO_2$ concentration detection unit 181 is implemented by a $CO_2$ sensor disposed in the indoor space. Also, the outdoor space $CO_2$ concentration detection unit 182 is implemented by a $CO_2$ sensor disposed in the outdoor space. Moreover, the first control unit 110, the first storage unit 120, and the first communication unit 130 are implemented by a central controller communicably connected to the ventilation fan for supplying air, the ventilation fan for exhausting air, the $CO_2$ sensor disposed in the indoor space, and the $CO_2$ sensor disposed in the outdoor space. Also, the second control unit 140, the second storage unit 150, the operation input unit 190, and the display output unit 200 are implemented by a portable terminal such as a smartphone communicably connected to the central controller.

As described above, the configuration of the ventilation system according to the modification of the first embodiment includes: the ventilation unit 170 that exchanges the air in the indoor space 27 and the air in the outdoor space, which is a space different from the indoor space 27, and ventilates the indoor space 27; the calculation unit 112 that calculates the threshold T on the basis of the $CO_2$ concentration Coa of the air in the outdoor space and the selected operation mode selected in advance from the plurality of operation modes; and the operation control unit 113 that controls the ventilation unit 170 such that the amount of ventilation is larger when

the $CO_2$ concentration of the air in the indoor space 27 is higher than or equal to the threshold T than when the $CO_2$ concentration Cra of the air in the indoor space 27 is lower than the threshold T. With this configuration, an effect similar to that of the ventilation apparatus 100 having the similar configuration described in the first embodiment is obtained.

Moreover, the additional configuration of the ventilation apparatus 100 described in the first embodiment or another modification of the ventilation apparatus 100 may be added to the ventilation system according to the modification of the first embodiment.

Second Embodiment.

Next, a ventilation apparatus 101 according to a second embodiment will be described. The ventilation apparatus 101 according to the second embodiment is different from the ventilation apparatus 100 according to the first embodiment in the ventilation operation and the information stored in the first storage unit 120. Note that the configuration of the ventilation apparatus 101 according to the second embodiment except for the ventilation operation and the information stored in the first storage unit 120 is substantially similar to that of the ventilation apparatus 100 according to the first embodiment, and thus the description thereof will be omitted.

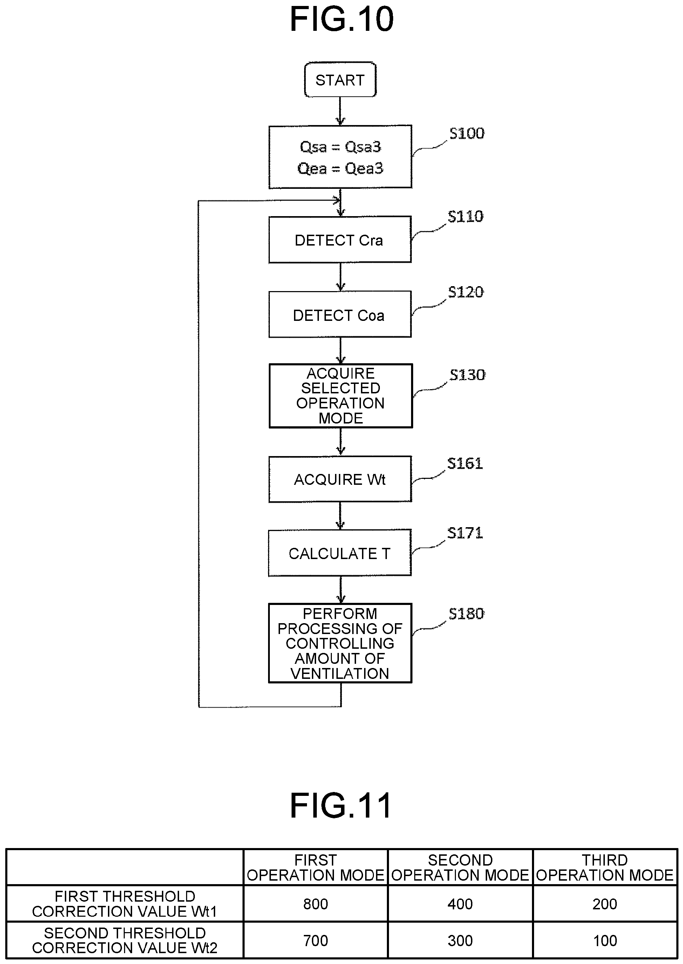

FIG. 10 is a flowchart related to the ventilation operation of the ventilation apparatus according to the second embodiment. Next, the ventilation operation of the ventilation apparatus 101 will be described. Note that as with the ventilation operation of the ventilation apparatus according to the first embodiment, as a premise at the start of the flowchart of FIG. 10, it is assumed that a user has performed an operation for starting the operation of the ventilation apparatus 101 through the operation input unit 190. It is also assumed that the processing in the flowchart related to the ventilation operation of FIG. 10 and the processing in the flowchart related to the processing of changing the operation mode of FIG. 5 are performed independently of each other. In addition, the processings from step S100 to step S130 in the ventilation operation of the ventilation apparatus 101 according to the second embodiment are substantially the same as the processings from step S100 to step S130 in the ventilation operation of the ventilation apparatus 100 according to the first embodiment, and thus the description thereof will be omitted.

After step S130 is completed, the processing proceeds to step S161. In step S161, the calculation unit 112 acquires the threshold correction value Wt on the basis of the selected operation mode stored in the first storage unit 120 acquired in step S130 and a lookup table indicating a relationship between the operation mode and the threshold correction value Wt stored in the first storage unit 120.

FIG. 11 is an example of the lookup table illustrating the relationship between the operation mode and the threshold correction value Wt stored in the ventilation apparatus according to the second embodiment. The lookup table indicating the relationship between the operation mode and the threshold correction value Wt will be described. First, the lookup table indicating the relationship between the operation mode and the threshold correction value Wt is stored in the first storage unit 120. The lookup table indicating the relationship between the operation mode and the threshold correction value Wt stores the threshold correction value Wt associated for each operation mode. Also, the threshold correction value Wt is different for each operation mode associated. Moreover, the ventilation apparatus 101 of the second embodiment includes a plurality of the threshold correction values Wt that are the first threshold correction value Wt1 and the second threshold correction value Wt2.

In the lookup table illustrated in FIG. 11, the first threshold correction value Wt1 and the second threshold correction value Wt2 in each operation mode are set as follows. The first threshold correction value Wt1 in the first operation mode is 800 ppm, and the second threshold correction value Wt2 in the first operation mode is 700 ppm. The first threshold correction value Wt1 in the second operation mode is 400 ppm, and the second threshold correction value Wt2 in the second operation mode is 300 ppm. The first threshold correction value Wt1 in the third operation mode is 200 ppm, and the second threshold correction value Wt2 in the third operation mode is 100 ppm.

The description returns to the processing of step S161. For example, in a case where the selected operation mode stored in the first storage unit 120 is the first operation mode, the calculation unit 112 acquires information indicating that the first threshold correction value Wt1 is 800 ppm and information indicating that the second threshold correction value Wt2 is 700 ppm in step S161. Moreover, for example, in a case where the selected operation mode stored in the first storage unit 120 is the second operation mode, the calculation unit 112 acquires information indicating that the first threshold correction value Wt1 is 400 ppm and information indicating that the second threshold correction value Wt2 is 300 ppm in step S161.

The description returns to the ventilation operation of the ventilation apparatus 101. After step S161 is completed, the processing proceeds to step S171. In step S171, the calculation unit 112 calculates the threshold T on the basis of the $CO_2$ concentration Coa of the air in the outdoor space detected by the outdoor space $CO_2$ concentration detection unit 182 in step 5120, and the threshold correction value Wt acquired by the calculation unit 112 in step S161. In step S171, the threshold T is calculated by adding the threshold correction value Wt to the $CO_2$ concentration of the air in the outdoor space ($T=Coa+Wt$). The ventilation apparatus 101 of the second embodiment includes the first threshold correction value Wt1 and the second threshold correction value Wt2, and thus the threshold T calculated in step S171 also includes the first threshold T1 and the second threshold T2.

For example, it is assumed that the selected operation mode stored in the first storage unit 120 is the first operation mode, and the $CO_2$ concentration Coa of the air in the outdoor space detected by the outdoor space $CO_2$ concentration detection unit 182 in step 5120 is 400 ppm. In this case, the first threshold T1 is 1200 ppm ($T1=Coa+Wt1=400+800=1200$), and the second threshold T2 is 1100 ppm ($T2=Coa+Wt2=400+700=1100$).

Moreover, for example, it is assumed that the selected operation mode stored in the first storage unit 120 is the first operation mode, and the $CO_2$ concentration Coa of the air in the outdoor space detected by the outdoor space $CO_2$ concentration detection unit 182 in step S120 is 600 ppm. In this case, the first threshold T1 is 1400 ppm ($T1=Coa+Wt1=600+800=1400$), and the second threshold T2 is 1300 ppm ($T2=Coa+Wt2=600+700=1300$).

As described above, under the same operation mode selected as the selected operation mode, the threshold T is higher when the $CO_2$ concentration Coa of the air in the outdoor space is high than when the $CO_2$ concentration Coa of the air in the outdoor space is low.

Moreover, for example, it is assumed that the selected operation mode stored in the first storage unit 120 is the second operation mode, and the $CO_2$ concentration Coa of the air in the outdoor space detected by the outdoor space $CO_2$ concentration detection unit 182 in step 5120 is 400 ppm. In this case, the first threshold T1 is 800 ppm ($T1=Coa+Wt1=400+400=800$), and the second threshold T2 is 700 ppm ($T2=Coa+Wt2=400+300=700$).

As described above, under the same $CO_2$ concentration Coa of the air in the outdoor space, when the selected operation mode is different, the threshold T is also different.

The description returns to the ventilation operation of the ventilation apparatus 101. After step S171 is completed, the processing proceeds to step S180. Note that the processing after step 5180 is substantially the same as the processing after step 5180 in the ventilation operation of the ventilation apparatus 100 according to the first embodiment, and thus the description thereof will be omitted.

As with the ventilation apparatus 100 according to the first embodiment, as described above, the configuration of the ventilation apparatus 101 according to the second embodiment includes: the ventilation unit 170 that exchanges the air in the indoor space 27 and the air in the outdoor space, which is a space different from the indoor space 27, and ventilates the indoor space 27; the calculation unit 112 that calculates the threshold T on the basis of the $CO_2$ concentration Coa of the air in the outdoor space and the selected operation mode selected in advance from the plurality of operation modes; and the operation control unit 113 that controls the ventilation unit 170 such that the amount of ventilation is larger when the $CO_2$ concentration of the air in the indoor space 27 is higher than or equal to the threshold T than when the $CO_2$ concentration Cra of the air in the indoor space 27 is lower than the threshold T. With this configuration, the ventilation apparatus 101 according to the second embodiment has an effect similar to the effect described in the first embodiment.

Furthermore, as with the ventilation apparatus 100 according to the first embodiment, the ventilation apparatus 101 according to the second embodiment includes, as an additional configuration, a storage unit (corresponding to the first storage unit 120) that stores the correction values (corresponding to the threshold correction values Wt) associated with the plurality of operation modes, in which the correction value is different for each of the operation modes associated, and the calculation unit 112 calculates the threshold T on the basis of the $CO_2$ concentration Coa of the air in the outdoor space and the correction value associated with the operation mode selected as the selected operation mode. With this additional configuration, the ventilation apparatus 101 according to the second embodiment has an effect similar to the effect described in the first embodiment.

Furthermore, the ventilation apparatus 101 according to the second embodiment includes, as an additional configuration, the configuration in which the correction value is a threshold correction value (corresponding to the threshold correction value Wt) used to calculate the threshold T, and the calculation unit 112 calculates the threshold T on the basis of the $CO_2$ concentration of the air in the outdoor space and the threshold correction value associated with the selected operation mode. With this additional configuration, the ventilation apparatus 101 according to the second embodiment has an effect of being able to calculate, as a more appropriate value, the threshold for enabling ventilation according to the characteristics of each operation mode.

Furthermore, as with the ventilation apparatus 100 according to the first embodiment, the ventilation apparatus 101 according to the second embodiment includes, as an additional configuration, the configuration in which, under the same operation mode selected as the selected operation mode, the threshold T is calculated to be a higher value when the $CO_2$ concentration Coa of the air in the outdoor space is high than when the $CO_2$ concentration Coa of the air in the outdoor space is low. With this additional configuration, the ventilation apparatus 101 according to the second embodiment has an effect similar to the effect described in the first embodiment.

Moreover, as with the ventilation control method according to the first embodiment, as described above, the ventilation control method according to the second embodiment includes: the first step (corresponding to step S110) of acquiring the $CO_2$ concentration Cra of the air in the indoor space 27; the second step (corresponding to step S120) of acquiring the $CO_2$ concentration Coa of the air in the outdoor space; the third step (corresponding to step S130) of acquiring the selected operation mode selected in advance from the plurality of operation modes; the fourth step (corresponding to steps S161 to S171) of calculating the threshold T on the basis of the $CO_2$ concentration Coa of the air in the outdoor space acquired in the second step and the selected operation mode acquired in the third step; and the fifth step (corresponding to step S180) of controlling the amount of ventilation on the basis of the $CO_2$ concentration Cra in the indoor space 27 acquired in the first step and the threshold T calculated in the fourth step, in which the amount of ventilation controlled in the fifth step is controlled to a larger amount when the $CO_2$ concentration Cra in the indoor space 27 acquired in the first step is higher than or equal to the threshold T calculated in the fourth step than when the $CO_2$ concentration Cra in the indoor space acquired in the first step is lower than the threshold T calculated in the fourth step. With this configuration, the ventilation control method according to the second embodiment has an effect similar to the effect described in the first embodiment.

Furthermore, as with the ventilation control method according to the first embodiment, the ventilation control method according to the second embodiment includes, as an additional configuration, the configuration in which, in the fourth step, the correction value (corresponding to the threshold correction value Wt) associated with the operation mode selected as the selected operation mode acquired in the third step is acquired (corresponding to step S161), and the threshold T is calculated on the basis of the $CO_2$ concentration Coa of the air in the outdoor space acquired in the second step and the correction value acquired (corresponding to step S171). With this additional configuration, the ventilation control method according to the second embodiment has an effect similar to the effect described in the first embodiment.

Furthermore, the ventilation control method according to the second embodiment includes, as an additional configuration, the configuration in which the correction value acquired in the fourth step is the threshold correction value (corresponding to the threshold correction value Wt) used to calculate the threshold T, and, in the fourth step, the threshold is calculated on the basis of the $CO_2$ concentration of the air in the outdoor space and the threshold correction value associated with the selected operation mode (corresponding to step S171). With this additional configuration, the ventilation control method according to the second embodiment has an effect of being able to calculate, as a more appropriate value, the threshold for enabling ventilation according to the characteristics of each operation mode.

Furthermore, as with the ventilation control method according to the first embodiment, the ventilation control method according to the second embodiment includes, as an additional configuration, the configuration in which, under the same operation mode selected as the selected operation mode, the threshold T calculated in the fourth step is a higher value when the $CO_2$ concentration Coa of the air in the outdoor space is high than when the $CO_2$ concentration Coa of the air in the outdoor space is low. With this additional configuration, the ventilation control method according to the second embodiment has an effect similar to the effect described in the first embodiment.

A modification of the second embodiment will be described. Note that as the modification of the second embodiment, the configuration of the ventilation apparatus described in the modification of the first embodiment may be applied to the ventilation apparatus 101 of the second embodiment.

As with the ventilation apparatus 100 according to the first embodiment, the ventilation apparatus 101 according to the second embodiment may also be a ventilation system in which the configuration of the functional block diagram illustrated in FIG. 4 is implemented by a plurality of devices. Note that the ventilation operation in the operation mode of the ventilation system according to the modification of the second embodiment is similar to the ventilation operation of the ventilation apparatus 101 described in the second embodiment.

As described above, the configuration of the ventilation system according to the modification of the second embodiment includes: the ventilation unit 170 that exchanges the air in the indoor space 27 and the air in the outdoor space, which is a space different from the indoor space 27, and ventilates the indoor space 27; the calculation unit 112 that calculates the threshold T on the basis of the $CO_2$ concentration Coa of the air in the outdoor space and the selected operation mode selected in advance from the plurality of operation modes; and the operation control unit 113 that controls the ventilation unit 170 such that the amount of ventilation is larger when the $CO_2$ concentration of the air in the indoor space 27 is higher than or equal to the threshold T than when the $CO_2$ concentration Cra of the air in the indoor space 27 is lower than the threshold T. With this configuration, an effect similar to that of the ventilation apparatus 100 having the similar configuration described in the first embodiment is obtained.

Moreover, the additional configuration of the ventilation apparatus 101 described in the second embodiment may be added to the ventilation system according to the modification of the second embodiment.

Third Embodiment.

Next, a ventilation apparatus 102 according to a third embodiment will be described. The ventilation apparatus 102 according to the third embodiment is different from the ventilation apparatus 100 according to the first embodiment in that the air passage switch damper 20 opens and closes the opening 18a and that the $CO_2$ sensor 14 includes only the first $CO_2$ sensor 14a. Note that except for the air passage switch damper 20 opening and closing the opening 18a and the $CO_2$ sensor 14 in-

cluding only the first $CO_2$ sensor, the configuration of the ventilation apparatus 102 according to the third embodiment is substantially similar to that of the ventilation apparatus 100 according to the first embodiment, and thus the description thereof will be omitted.

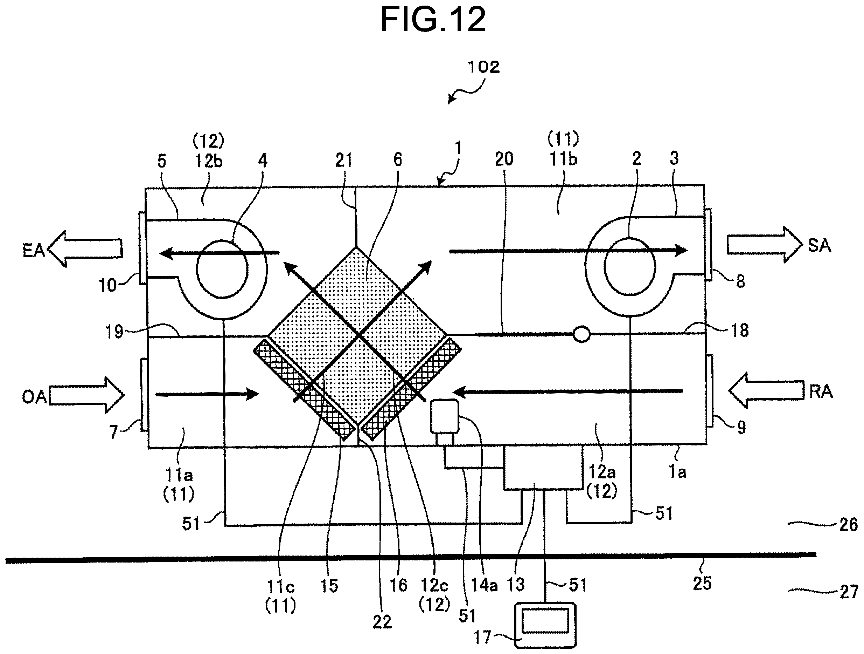

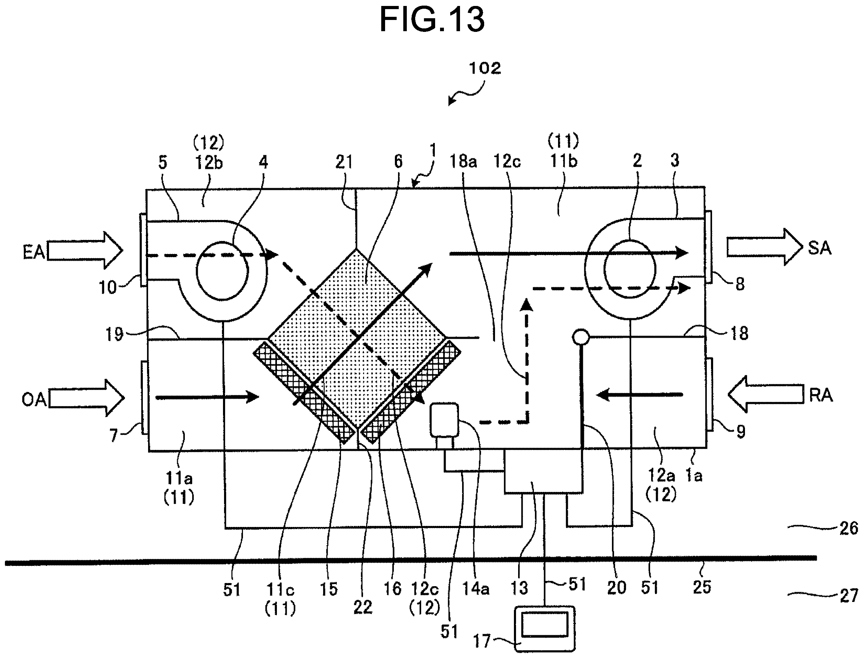

FIG. 12 is a schematic diagram illustrating a simplified structure of the ventilation apparatus according to the third embodiment in a state where the air passage switch damper is moved to a position to close the opening and open the exhaust air passage. FIG. 13 is a schematic diagram illustrating a simplified structure of the ventilation apparatus according to the third embodiment in a state where the air passage switch damper is moved to a position to open the opening and close the exhaust air passage. The air passage switch damper 20 is movable to the position to close the opening 18a and open the exhaust air passage as illustrated in FIG. 12, and the position to open the opening 18a and close the exhaust air passage as illustrated in FIG. 13. Such an air passage switch damper 20 has, for example, a plate shape with one end driven by a motor not illustrated. It is also assumed that the position of the air passage switch damper 20 is controlled by the operation control unit 113.

When the air passage switch damper 20 is at the position to close the opening 18a and open the exhaust air passage as illustrated in FIG. 12, the flow of the air in the indoor space 27 drawn into the ventilation apparatus 102 and the flow of the air in the outdoor space drawn into the ventilation apparatus 102 are similar to the flow of the air described in the first embodiment, and thus the description thereof will be omitted. Note that in this case, the first $CO_2$ sensor 14a detects the $CO_2$ concentration of the return air RA flowing through the exhaust air passage 12 and detects the $CO_2$ concentration of the air in the indoor space 27.

The flow of the air in the outdoor space drawn into the ventilation apparatus 102 when the air passage switch damper 20 is at the position to open the opening 18a and close the exhaust air passage 12 as illustrated in FIG. 13 is described. Note that when the air passage switch damper 20 is at the position to open the opening 18a and close the exhaust air passage 12 as illustrated in FIG. 13, the operation control unit 113 performs control to stop the exhaust blower 5 and operate only the supply blower 3.

In this case, an air flow indicated by a broken line in FIG. 13 is generated. That is, the air in the outdoor space is drawn into the post-heat exchange indoor air passage 12b from the exhaust air outlet 10 and is supplied into the indoor space 27 via the intra-element exhaust air passage 12c, the pre-heat exchange indoor air passage 12a, the opening 18a, the post-heat exchange outdoor air passage 11b, the supply blower 3, and the supply air outlet 8. Moreover, the first $CO_2$ sensor 14a detects the $CO_2$ concentration of the air in the outdoor space drawn in from the exhaust air outlet 10.

That is, the first $CO_2$ sensor 14a can detect the $CO_2$ concentration of the air in the indoor space 27 when the air passage switch damper 20 is at the position to close the opening 18a and open the exhaust air passage 12, and can detect the $CO_2$ concentration of the air in the outdoor space when the air passage switch damper 20 is at the position to open the opening 18a and close the exhaust air passage 12.

As described above, the operation control unit 113 performs control to move the air passage switch damper 20 to the position to open the opening 18a and close the exhaust air passage 12, stop the exhaust blower 5, and operate only the supply blower 3 when, for example, the $CO_2$ concentration of the air in the outdoor space is detected such as in step S120 of the flowchart related to the ventilation operation of the ventilation apparatus.

As with the ventilation apparatus 100 according to the first embodiment, as described above, the configuration of the ventilation apparatus 102 according to the third embodiment includes: the ventilation unit 170 that exchanges the air in the indoor space 27 and the air in the outdoor space, which is a space different from the indoor space 27, and ventilates the indoor space 27; the calculation unit 112 that calculates the threshold T on the basis of the $CO_2$ concentration Coa of the air in the outdoor space and the selected operation mode selected in advance from the plurality of operation modes; and the operation control unit 113 that controls the ventilation unit 170 such that the amount of ventilation is larger when the $CO_2$ concentration of the air in the indoor space 27 is higher than or equal to the threshold T than when the $CO_2$ concentration Cra of the air in the indoor space 27 is lower than the threshold T. With this configuration, the ventilation apparatus 102 according to the third embodiment has an effect similar to the effect described in the first embodiment.

Furthermore, the ventilation apparatus 102 according to the third embodiment includes, as an additional configuration, the $CO_2$ sensor 14a that detects the $CO_2$ concentration, the opening 18a that allows the exhaust air passage 12 and the supply air passage 11 to communicate with each other, and the air passage switch damper 20 that is movable to the position to close the opening 18a and open the exhaust air passage 12 and to the position to open the opening 18a and close the exhaust air passage 12. The $CO_2$ sensor 14a is provided at the position where the air discharged from the indoor space 27 to the outdoor space passes when the air passage switch damper 20 is at the position to close the opening 18a and open the exhaust air passage 12, and where the air supplied from the outdoor space to the indoor space 27 passes when the air passage switch damper 20 is at the position to open the opening 18a and close the exhaust air passage 12. With this additional configuration, the ventilation apparatus 102 according to the third embodiment can detect the $CO_2$ concentration of the air in the outdoor space and the $CO_2$ concentration of the air in the indoor space using the single $CO_2$ sensor, and has an effect of being able to reduce the production cost as compared to the configuration of the ventilation apparatus 100 according to the first embodiment using the two $CO_2$ sensors.

Reference Signs List

1 main body; 1a housing; 2 supply motor; 3 supply blower; 4 exhaust motor; 5 exhaust blower; 6 heat exchange element; 7 outdoor air inlet; 8 supply air outlet; 9 indoor air inlet; 10 exhaust air outlet; 11 supply air passage; 11a pre-heat exchange outdoor air passage; 11b post-heat exchange outdoor air passage; 11c intra-element supply air passage; 12 exhaust air passage; 12a pre-heat exchange indoor air passage; 12b post-heat exchange indoor air passage; 12c intra-element exhaust air passage; 13 control device; 14 $CO_2$ sensor; 14a first $CO_2$ sensor; 14b second $CO_2$ sensor; 15 supply air filter; 16 exhaust air filter; 17 remote control; 18 partition wall; 18a opening; 19 partition wall; 20 air passage switch damper; 21 partition wall; 22 partition wall; 25 ceiling; 26 attic space; 27 indoor space; 31 first processor; 32 first memory; 33 first hardware interface; 41 second processor; 42 second memory; 43 second hardware interface; 44 input device; 45 display device; 100 ventilation apparatus; 101 ventilation apparatus; 102 ventilation apparatus; 110 first control unit; 111 $CO_2$ concentration acquisition unit; 112 calculation unit; 113 operation control unit; 120 first storage unit; 130 first communication unit; 140 second control unit; 150 second storage unit; 160 second communication unit; 170 ventilation unit; 171 supply air blower unit; 172 exhaust air blower unit; 180 $CO_2$ concentration detection unit; 181 indoor space $CO_2$ concentration detection unit; 182 outdoor space $CO_2$ concentration detection unit; 190 operation input unit; 200 display output unit.

**Claims**

1. A ventilation apparatus (100) comprising:

   a ventilation unit (170) to exchange air in an indoor space (27) and air in an outdoor space that is a space different from the indoor space (27), and to ventilate the indoor space (27);
   a calculation unit (112) to calculate a threshold on the basis of $CO_2$ concentration of the air in the outdoor space and a selected operation mode selected in advance from a plurality of operation modes;
   an operation control unit (113) to control the ventilation unit (170) such that an amount of ventilation is larger when $CO_2$ concentration of the air in the indoor space (27) is higher than or equal to the threshold than when the $CO_2$ concentration of the air in the indoor space (27) is lower than the threshold; and
   a storage unit (120) to store a correction value associated for each of the plurality of operation modes, wherein

the correction value is different for each of the operation modes associated, and

the calculation unit (112) calculates the threshold on the basis of the $CO_2$ concentration of the air in the outdoor space and the correction value associated with the operation mode selected as the selected operation mode.

2. The ventilation apparatus (100) according to claim 1, wherein

the correction value is a control-value correction value used to calculate a control value for the $CO_2$ concentration in the indoor space (27), and

the calculation unit (112) calculates the control value for the $CO_2$ concentration in the indoor space (27) on the basis of the $CO_2$ concentration of the air in the outdoor space and the control-value correction value associated with the operation mode selected as the selected operation mode, and calculates the threshold on the basis of the control value for the $CO_2$ concentration in the indoor space (27) calculated.

3. The ventilation apparatus (100) according to claim 2, wherein, under the same $CO_2$ concentration of the air in the outdoor space, the threshold is calculated to be a higher value when an operation mode in which the control value for the $CO_2$ concentration in the indoor space (27) is high is selected as the selected operation mode than when an operation mode in which the control value for the $CO_2$ concentration in the indoor space (27) is low is selected as the selected operation mode.

4. The ventilation apparatus (101) according to claim 1, wherein

the correction value is a threshold correction value used to calculate the threshold, and

the calculation unit (112) calculates the threshold on the basis of the $CO_2$ concentration of the air in the outdoor space and the threshold correction value associated with the selected operation mode.

5. The ventilation apparatus (100) according to any one of claims 1 to 4, wherein, under the same operation mode selected as the selected operation mode, the threshold is calculated to be a higher value when the $CO_2$ concentration of the air in the outdoor space is high than when the $CO_2$ concentration of the air in the outdoor space is low.

6. The ventilation apparatus (100) according to any one of claims 1 to 5, comprising

an operation input unit (190) to receive information related to an operation from a user, wherein the selected operation mode is selected on the basis of the information related to the operation from the user input to the operation input unit (190).

7. The ventilation apparatus (100) according to claim 6, wherein

the information related to the operation from the user is information for selecting the control value for the $CO_2$ concentration in the indoor space (27),

the operation mode is a mode for performing operation corresponding to each control value for the $CO_2$ concentration in the indoor space (27), and

the selected operation mode is an operation mode selected for performing operation corresponding to the control value for the $CO_2$ concentration in the indoor space (27) selected.

8. The ventilation apparatus (100) according to any one of claims 1 to 7, comprising a $CO_2$ concentration detection unit (180) to detect the $CO_2$ concentration of the air in the outdoor space and the $CO_2$ concentration of the air in the indoor space (27).

9. The ventilation apparatus (100) according to any one of claims 1 to 8, comprising

a housing (1a) in which an exhaust air passage (12) for discharging the air in the indoor space (27) to the outdoor space and a supply air passage (11) for supplying the air in the outdoor space to the indoor space (27) are formed, wherein

the ventilation unit (170) includes an exhaust blower (5) provided inside the exhaust air passage (12) and a supply blower (3) provided inside the supply air passage (11) .

10. The ventilation apparatus (100) according to claim 9, comprising

a first $CO_2$ sensor (14a) to detect the $CO_2$ concentration of the air in the indoor space (27) and a second $CO_2$ sensor (14b) to detect the $CO_2$ concentration of the air in the outdoor space, wherein

the first $CO_2$ sensor (14a) is provided inside the exhaust air passage (12), and the second $CO_2$ sensor (14b) is provided inside the supply air passage (11).

11. The ventilation apparatus (102) according to claim 9, comprising:

a $CO_2$ sensor (14a) to detect $CO_2$ concentration;
an opening (18a) that allows the exhaust air passage (12) and the supply air passage (11) to communicate with each other; and
an air passage switch damper (20) movable to a position to close the opening (18a) and open the exhaust air passage (12), and to a position to open the opening (18a) and close the exhaust air passage (12), wherein
the $CO_2$ sensor (14a) is provided at a position where the air discharged from the indoor space (27) to the outdoor space passes when the air passage switch damper (20) is at the position to close the opening (18a) and open the exhaust air passage (12), and where the air supplied from the outdoor space to the indoor space (27) passes when the air passage switch damper (20) is at the position to open the opening (18a) and close the exhaust air passage (12).

12. A ventilation control method comprising:

a first step of acquiring $CO_2$ concentration of air in an indoor space (27);
a second step of acquiring $CO_2$ concentration of air in an outdoor space;
a third step of acquiring a selected operation mode selected in advance from a plurality of operation modes;
a fourth step of calculating a threshold on the basis of the $CO_2$ concentration of the air in the outdoor space acquired in the second step and the selected operation mode acquired in the third step; and
a fifth step of controlling an amount of ventilation on the basis of the $CO_2$ concentration in the indoor space (27) acquired in the first step and the threshold calculated in the fourth step, wherein
the amount of ventilation controlled in the fifth step is controlled to a larger amount when the $CO_2$ concentration in the indoor space (27) acquired in the first step is higher than or equal to the threshold calculated in the fourth step than when the $CO_2$ concentration in the indoor space (27) acquired in the first step is lower than the threshold calculated in the fourth step;
wherein the fourth step includes acquiring a correction value associated with the operation mode selected as the selected operation mode acquired in the third step and calculating the threshold on the basis of the $CO_2$ concentration of the air in the outdoor space acquired in the second step and the correction value acquired, and
wherein the correction value is different for each of the operation modes associated.

13. The ventilation control method according to claim 12, wherein

the correction value acquired in the fourth step is a control-value correction value used to calculate a control value for the $CO_2$ concentration in the indoor space (27), and
the fourth step includes calculating the control value for the $CO_2$ concentration in the indoor space (27) on the basis of the $CO_2$ concentration of the air in the outdoor space and the control-value correction value associated with the operation mode selected as the selected operation mode, and calculating the threshold on the basis of the control value for the $CO_2$ concentration in the indoor space (27) calculated.

14. The ventilation control method according to claim 13, wherein, under the same $CO_2$ concentration of the air in the outdoor space, the threshold calculated in the fourth step is a higher value when an operation mode in which the control value for the $CO_2$ concentration in the indoor space (27) is high is selected as the selected operation mode than when an operation mode in which the control value for the $CO_2$ concentration in the indoor space (27) is low is selected as the selected operation mode.

15. The ventilation control method according to claim 12, wherein

the correction value acquired in the fourth step is a threshold correction value used to calculate the threshold, and
the fourth step includes calculating the threshold on the basis of the $CO_2$ concentration of the air in the outdoor space and the threshold correction value associated with the selected operation mode.

16. The ventilation control method according to any one of claims 12 to 15, wherein, under the same operation mode selected as the selected operation mode, the threshold calculated in the fourth step is a higher value when the $CO_2$ concentration of the air in the outdoor space is high than when the $CO_2$ concentration of the air in the outdoor space is low.

17. The ventilation control method according to any one of claims 12 to 16, comprising a sixth step of

receiving information related to an operation from a user, and
storing one operation mode among the plurality of operation modes as the selected operation mode on the basis of the information related to the operation from the user.

**18.** The ventilation control method according to claim 17, wherein

> the operation mode is a mode for performing operation corresponding to each control value for the $CO_2$ concentration in the indoor space (27), the control value for the $CO_2$ concentration in the indoor space (27) being selected by the user, and
>
> the sixth step includes storing the operation mode for performing operation corresponding to the control value for the $CO_2$ concentration in the indoor space (27) selected by the user as the selected operation mode.

**Patentansprüche**

**1.** Lüftungsgerät (100), das aufweist:

> eine Belüftungseinheit (170) zum Austausch von Luft in einem Innenraum (27) und Luft in einem Außenraum, der ein vom Innenraum (27) verschiedener Raum ist, und zur Belüftung des Innenraums (27);
>
> eine Berechnungseinheit (112) zum Berechnen eines Schwellwerts auf der Grundlage der $CO_2$-Konzentration der Luft in dem Außenraum und einer ausgewählten Betriebsweise, die im Voraus aus einer Vielzahl von Betriebsweisen ausgewählt wurde;
>
> eine Betriebsweise-Steuereinheit (113), um die Belüftungseinheit (170) so zu steuern, dass eine Belüftungsmenge größer ist, wenn die $CO_2$-Konzentration der Luft in dem Innenraum (27) höher als oder gleich dem Schwellwert ist, als wenn die $CO_2$-Konzentration der Luft in dem Innenraum (27) niedriger als der Schwellwert ist; und
>
> eine Speichereinheit (120) zum Speichern eines Korrekturwerts, der jeder der Vielzahl von Betriebsweisen zugeordnet ist, wobei
>
> der Korrekturwert für jede der zugeordneten Betriebsweisen unterschiedlich ist, und
>
> die Berechnungseinheit (112) den Schwellwert auf der Grundlage der $CO_2$-Konzentration der Luft im Außenraum und des Korrekturwerts berechnet, der der als der ausgewählte Betriebsweise ausgewählt ist.

**2.** Lüftungsgerät (100) nach Anspruch 1, wobei

> der Korrekturwert ein Steuerwertkorrekturwert ist, der zur Berechnung eines Steuerwertes für die $CO_2$-Konzentration im Innenraum (27) verwendet wird, und
>
> die Berechnungseinheit (112) den Steuerwert für die $CO_2$-Konzentration im Innenraum (27) auf der Grundlage der $CO_2$-Konzentration der Luft im Außenraum und des Steuerwert-Korrekturwerts, der der Betriebsweise zugeordnet ist, die als die ausgewählte Betriebsweise ausgewählt ist, berechnet und den Schwellwert auf der Grundlage des berechneten Steuerwerts für die $CO_2$-Konzentration im Innenraum (27) berechnet.

**3.** Lüftungsgerät (100) entsprechend Anspruch 2, wobei bei gleicher $CO_2$-Konzentration der Luft im Außenraum der Schwellwert so berechnet wird, dass er höher ist, wenn eine Betriebsweise, in der der Steuerwert für die $CO_2$-Konzentration im Innenraum (27) hoch ist, als die ausgewählte Betriebsweise ausgewählt wird, als wenn eine Betriebsweise, in der der Steuerwert für die $CO_2$-Konzentration im Innenraum (27) niedrig ist, als die ausgewählte Betriebsweise ausgewählt wird.

**4.** Lüftungsgerät (101) nach Anspruch 1, wobei

> der Korrekturwert ein Schwellwertkorrekturwert ist, der zur Berechnung des Schwellwerts verwendet wird, und
>
> die Einheit (112) den Schwellwert auf der Grundlage der $CO_2$-Konzentration der Luft im Außenraum und des der gewählten Betriebsweise zugeordneten Schwellwertkorrekturwerts berechnet.

**5.** Lüftungsgerät (100) nach einem der Ansprüche 1 bis 4, wobei der Schwellwert bei der gleichen Betriebsweise, die als die gewählte Betriebsweise gewählt wurde, so berechnet wird, dass er höher ist, wenn die $CO_2$-Konzentration der Luft im Außenraum hoch ist, als wenn die $CO_2$-Konzentration der Luft im Außenraum niedrig ist.

**6.** Lüftungsgerät (100) nach einem der Ansprüche 1 bis 5, aufweisend

> eine Betriebsweise-Eingabeeinheit (190) zum Aufnehmen von Informationen in Bezug auf eine Betriebsweise von einem Benutzer, wobei
>
> die gewählte Betriebsweise auf der Grundlage der auf die Betriebsweise bezogenen Informationen von der Benutzereingabe an die Betriebseingabeeinheit (190) ausgewählt wird.

**7.** Lüftungsgerät (100) nach Anspruch 6, wobei

> die auf die Betriebsweise bezogene Information des Benutzers eine Information zur Auswahl des Steuerwertes für die $CO_2$-Konzentration im Innenraum (27) ist,
>
> die Betriebsweise eine Betriebsweise zum Ausführen der Betriebsweise ist, die jedem Steuer-

wert für die $CO_2$-Konzentration im Innenraum (27) entspricht, und

die ausgewählte Betriebsweise eine Betriebsweise ist, die zum Ausführen der Betriebsweise entsprechend dem ausgewählten Steuerwert für die $CO_2$-Konzentration im Innenraum (27) ausgewählt wurde.

8. Lüftungsgerät (100) nach einem der Ansprüche 1 bis 7, das eine Einheit (180) zur Detektion der $CO_2$-Konzentration aufweist, um die $CO_2$-Konzentration der Luft in dem Außenraum und die $CO_2$-Konzentration der Luft in dem Innenraum (27) zu erkennen.

9. Lüftungsgerät (100) nach einem der Ansprüche 1 bis 8, aufweisend

ein Gehäuse (1a), in dem ein Abluftkanal (12) zum Abführen der Luft im Innenraum (27) in den Außenraum und ein Zuluftkanal (11) zum Zuführen der Luft im Außenraum in den Innenraum (27) gebildet sind, wobei

die Lüftungseinheit (170) ein Abluftgebläse (5) aufweist, das auf der Innenseite des Abluftkanals (12) bereitgestellt ist, und ein Zuluftgebläse (3), das auf der Innenseite des Zuluftkanals (11) bereitgestellt ist.

10. Lüftungsgerät (100) entsprechend dem Anspruch 9, aufweisend

einen ersten $CO_2$-Sensor (14a) zum Erkennen der $CO_2$-Konzentration der Luft in dem Innenraum (27) und einen zweiten $CO_2$-Sensor (14b) zum Erkennen der $CO_2$-Konzentration der Luft in dem Außenraum, wobei

der erste $CO_2$-Sensor (14a) auf der Innenseite des Abluftkanals (12) bereitgestellt ist, und der zweite $CO_2$-Sensor (14b) auf der Innenseite des Zuluftkanals (11) bereitgestellt ist.

11. Lüftungsgerät (102) nach Anspruch 9, aufweisend:

einen $CO_2$-Sensor (14a) zum Erkennen der $CO_2$-Konzentration;

eine Öffnung (18a), durch die der Abluftkanal (12) und der Zuluftkanal (11) miteinander kommunizieren können; und

eine Luftdurchlass-Schaltklappe (20), die in eine Position zum Schließen der Öffnung (18a) und Öffnen des Abluftdurchlasses (12) und in eine Position zum Öffnen der Öffnung (18a) und Schließen des Abluftdurchlasses (12) bewegbar ist, wobei

der $CO_2$-Sensor (14a) an einer Position bereitgestellt wird, an der die aus dem Innenraum (27) in den Außenraum abgegebene Luft vorbeiströmt, wenn sich die Luftdurchlass-Schaltklappe (20) in der Position zum Schließen der Öffnung (18a) und Öffnen des Abluftdurchlasses (12) befindet, und an der die aus dem Außenraum in den Innenraum (27) zugeführte Luft vorbeiströmt, wenn sich die Luftdurchlass-Schaltklappe (20) in der Position zum Öffnen der Öffnung (18a) und Schließen des Abluftdurchlasses (12) befindet.

12. Lüftungssteuerungsverfahren, das aufweist:

einen ersten Schritt des Erfassens der $CO_2$-Konzentration der Luft in einem Innenraum (27);

einen zweiten Schritt des Erfassens der $CO_2$-Konzentration der Luft in einem Außenraum;

einen dritten Schritt des Erfassens einer ausgewählten Betriebsweise, die im Voraus aus einer Vielzahl von Betriebsweisen ausgewählt wird;

einen vierten Schritt des Berechnens eines Schwellwerts auf der Grundlage der im zweiten Schritt erfassten $CO_2$-Konzentration der Luft in dem Außenraum und der im dritten Schritt erfassten ausgewählten Betriebsweise; und

einen fünften Schritt des Steuerns einer Belüftungsmenge auf der Grundlage der im ersten Schritt erfassten $CO_2$-Konzentration im Innenraum (27) und des im vierten Schritt berechneten Schwellwerts, wobei

die im fünften Schritt gesteuerte Belüftungsmenge auf einen größeren Betrag gesteuert wird, wenn die im ersten Schritt erfasste $CO_2$-Konzentration in dem Innenraum (27) höher oder gleich dem im vierten Schritt berechneten Schwellwert ist, als wenn die im ersten Schritt erfasste $CO_2$-Konzentration in dem Innenraum (27) niedriger als der im vierten Schritt berechnete Schwellwert ist;

wobei der vierte Schritt das Erfassen eines Korrekturwerts aufweist, der der Betriebsweise zugeordnet ist, die als die im dritten Schritt erfasste ausgewählte Betriebsweise ausgewählt ist, und das Berechnen des Schwellwerts auf der Grundlage der im zweiten Schritt erfassten $CO_2$-Konzentration der Luft im Außenraum und des erfassten Korrekturwerts, und

wobei der Korrekturwert für jede der zugeordneten Betriebsweisen unterschiedlich ist.

13. Lüftungssteuerungsverfahren nach Anspruch 12, wobei

der im vierten Schritt erfasste Korrekturwert ein Steuerwertkorrekturwert ist, der zur Berechnung eines Steuerwertes für die $CO_2$-Konzentration in dem Innenraum (27) verwendet wird, und

der vierte Schritt das Berechnen des Steuerwerts für die $CO_2$-Konzentration in dem Innenraum (27) auf der Grundlage der $CO_2$-Konzentration der Luft in dem Außenraum und des Steuerwert-Korrekturwerts, der der als ausgewählte Betriebsweise zugeordnet ist, und das Berechnen des Schwellwerts auf der Grundlage des berechneten Steuerwerts für die $CO_2$-Konzentration in dem Innenraum (27) aufweist.

**14.** Lüftungssteuerungsverfahren nach Anspruch 13, wobei bei gleicher $CO_2$-Konzentration der Luft in dem Außenraum der im vierten Schritt berechnete Schwellwert höher ist, wenn eine Betriebsweise, bei der der Steuerwert für die $CO_2$-Konzentration in dem Innenraum (27) hoch ist, als die ausgewählte Betriebsweise ausgewählt wird, als wenn eine Betriebsweise, bei der der Steuerwert für die $CO_2$-Konzentration in dem Innenraum (27) niedrig ist, als die ausgewählte Betriebsweise ausgewählt wird.

**15.** Lüftungssteuerungsverfahren nach Anspruch 12, wobei

der im vierten Schritt erfasste Korrekturwert ein Schwellwertkorrekturwert ist, der zur Berechnung des Schwellwerts verwendet wird, und der vierte Schritt die Berechnung des Schwellwerts auf der Grundlage der $CO_2$-Konzentration der Luft in dem Außenraum und des der gewählten Betriebsweise zugeordneten Schwellwertkorrekturwerts aufweist.

**16.** Lüftungssteuerungsverfahren nach einem der Ansprüche 12 bis 15, wobei der in dem vierten Schritt berechnete Schwellwert bei der gleichen Betriebsweise, die als die ausgewählte Betriebsweise ausgewählt wurde, ein höherer Wert ist, wenn die $CO_2$-Konzentration der Luft in dem Außenraum hoch ist, als wenn die $CO_2$-Konzentration der Luft in dem Außenraum niedrig ist.

**17.** Lüftungssteuerungsverfahren nach einem der Ansprüche 12 bis 16, das einen sechsten Schritt aufweist, in dem

Aufnehmen von Informationen bezüglich einer Betriebsweise von einem Benutzer, und Speichern einer Betriebsweise aus der Vielzahl von Betriebsweisen als die ausgewählte Betriebsweise auf der Grundlage der Informationen, die sich auf die Betriebsweise des Benutzers beziehen.

**18.** Lüftungssteuerungsverfahren nach Anspruch 17, wobei

die Betriebsweise eine Betriebsweise zum Ausführen einer Betriebsweise ist, die jedem Steuerwert für die $CO_2$-Konzentration in dem Innenraum (27) entspricht, wobei der Steuerwert für die $CO_2$-Konzentration in dem Innenraum (27) von dem Benutzer ausgewählt wird, und der sechste Schritt das Speichern der Betriebsweise zum Ausführen der Betriebsweise entsprechend dem vom Benutzer ausgewählten Steuerwert für die $CO_2$-Konzentration im Innenraum (27) als die ausgewählte Betriebsweise aufweist.

## Revendications

**1.** Dispositif de ventilation (100) comprenant :

une unité de ventilation (170) pour échanger de l'air dans un espace intérieur (27) et de l'air dans un espace extérieur qui est un espace différent de l'espace intérieur (27), et pour ventiler l'espace intérieur (27) ;
une unité de calcul (112) pour calculer un seuil sur la base d'une concentration en $CO_2$ de l'air dans l'espace extérieur et d'un mode d'opération sélectionné à l'avance parmi une pluralité de modes d'opération ;
une unité de commande d'opération (113) pour commander l'unité de ventilation (170) de telle sorte qu'une quantité de ventilation soit plus grande lorsque la concentration en $CO_2$ de l'air dans l'espace intérieur (27) est plus élevée que le, ou égale au, seuil que lorsque la concentration en $CO_2$ de l'air dans l'espace intérieur (27) est inférieure au seuil ; et
une unité de stockage (120) pour stocker une valeur de correction associée à chaque mode parmi la pluralité de modes d'opération, dans lequel
la valeur de correction est différente pour chacun des modes d'opération associés, et
l'unité de calcul (112) calcule le seuil sur la base de la concentration en $CO_2$ de l'air dans l'espace extérieur et de la valeur de correction associée au mode d'opération sélectionné en tant que mode d'opération sélectionné.

**2.** Dispositif de ventilation (100) selon la revendication 1, dans lequel

la valeur de correction est une valeur de correction de valeur de commande utilisée pour calculer une valeur de commande pour la concentration en $CO_2$ dans l'espace intérieur (27), et
l'unité de calcul (112) calcule la valeur de commande pour la concentration en $CO_2$ dans l'espace intérieur (27) sur la base de la concentra-

tion en $CO_2$ de l'air dans l'espace extérieur et de la valeur de correction de valeur de commande associée au mode d'opération sélectionné en tant que mode d'opération sélectionné, et calcule le seuil sur la base de la valeur de commande pour la concentration en $CO_2$ dans l'espace intérieur (27) calculée.

**3.** Dispositif de ventilation (100) selon la revendication 2, dans lequel, sous la même concentration en $CO_2$ de l'air dans l'espace extérieur, le seuil est calculé pour être une valeur plus élevée lorsqu'un mode d'opération dans lequel la valeur de commande pour la concentration en $CO_2$ dans l'espace intérieur (27) est élevée est sélectionné en tant que mode d'opération sélectionné que lorsqu'un mode d'opération dans lequel la valeur de commande pour la concentration en $CO_2$ dans l'espace intérieur (27) est faible est sélectionné en tant que mode d'opération sélectionné.

**4.** Dispositif de ventilation (101) selon la revendication 1, dans lequel

la valeur de correction est une valeur de correction de seuil utilisée pour calculer le seuil, et l'unité de calcul (112) calcule le seuil sur la base de la concentration en $CO_2$ de l'air dans l'espace extérieur et de la valeur de correction de seuil associée au mode d'opération sélectionné en tant que mode d'opération sélectionné.

**5.** Dispositif de ventilation (100) selon l'une quelconque des revendications 1 à 4, dans lequel, dans le même mode d'opération sélectionné en tant que mode d'opération sélectionné, le seuil est calculé pour être une valeur plus élevée lorsque la concentration en $CO_2$ de l'air dans l'espace extérieur est élevée que lorsque la concentration en $CO_2$ de l'air dans l'espace extérieur est faible.

**6.** Dispositif de ventilation (100) selon l'une quelconque des revendications 1 à 5, comprenant

une unité d'entrée d'opération (190) pour recevoir des informations relatives à une opération provenant d'un utilisateur, dans lequel le mode d'opération sélectionné est sélectionné sur la base des informations relatives à l'opération provenant de l'entrée d'utilisateur à l'unité d'entrée d'opération (190).

**7.** Dispositif de ventilation (100) selon la revendication 6, dans lequel

les informations relatives à l'opération provenant de l'utilisateur sont des informations pour sélectionner la valeur de commande pour la con-

centration en $CO_2$ dans l'espace intérieur (27), le mode d'opération est un mode pour réaliser une opération correspondant à chaque valeur de commande pour la concentration en $CO_2$ dans l'espace intérieur (27), et le mode d'opération sélectionné est un mode d'opération sélectionné pour réaliser une opération correspondant à chaque valeur de commande pour la concentration en $CO_2$ dans l'espace intérieur (27) sélectionné.

**8.** Dispositif de ventilation (100) selon l'une quelconque des revendications 1 à 7, comprenant une unité de détection de concentration en $CO_2$ (180) pour détecter la concentration en $CO_2$ de l'air dans l'espace extérieur et la concentration en $CO_2$ de l'air dans l'espace intérieur (27).

**9.** Dispositif de ventilation (100) selon l'une quelconque des revendications 1 à 8, comprenant

un logement (1a) dans lequel un passage d'air d'échappement (12) pour évacuer l'air dans l'espace intérieur (27) vers l'espace extérieur et un passage d'air d'alimentation (11) pour alimenter en air l'espace intérieur (27) depuis l'espace extérieur sont formés, dans lequel l'unité de ventilation (170) inclut une soufflante d'échappement (5) prévue à l'intérieur du passage d'air d'échappement (12) et une soufflante d'alimentation (3) prévue à l'intérieur du passage d'air d'alimentation (11).

**10.** Dispositif de ventilation (100) selon la revendication 9, comprenant

un premier capteur de $CO_2$ (14a) pour détecter la concentration en $CO_2$ de l'air dans l'espace intérieur (27) et un deuxième capteur de $CO_2$ (14b) pour détecter la concentration en $CO_2$ de l'air dans l'espace extérieur, dans lequel le premier capteur de $CO_2$ (14a) est prévu à l'intérieur du passage d'air d'échappement (12), et le deuxième capteur de $CO_2$ (14b) est prévu à l'intérieur du passage d'air d'alimentation (11).

**11.** Dispositif de ventilation (102) selon la revendication 9, comprenant :

un capteur de $CO_2$ (14a) pour détecter la concentration en $CO_2$ ; une ouverture (18a) qui permet au passage d'air d'échappement (12) et au passage d'air d'alimentation (11) de communiquer l'un avec l'autre ; et un amortisseur de commutateur de passage d'air (20) mobile vers une position pour fermer l'ouverture (18a) et ouvrir le passage d'air d'échappement (12), et vers une position pour ouvrir l'ouverture (18a) et fermer le passage d'air d'échappement (12), dans lequel

le capteur de $CO_2$ (14a) est prévu au niveau d'une position où l'air évacué de l'espace intérieur (27) vers l'espace extérieur passe lorsque l'amortisseur de commutation de passage d'air (20) est au niveau de la position pour fermer l'ouverture (18a) et ouvrir le passage d'air d'échappement (12), et où l'air alimenté par l'espace extérieur à l'espace intérieur (27) passe lorsque l'amortisseur de commutation de passage d'air (20) est au niveau de la position pour ouvrir l'ouverture (18a) et fermer le passage d'air d'échappement (12).

12. Procédé de commande de ventilation, comprenant :

une première étape consistant à acquérir une concentration en $CO_2$ d'air dans un espace intérieur (27) ;
une deuxième étape consistant à acquérir une concentration en $CO_2$ d'air dans un espace extérieur ;
une troisième étape consistant à acquérir un mode d'opération sélectionné à l'avance parmi une pluralité de modes d'opération ;
une quatrième étape consistant à calculer un seuil sur la base de la concentration en $CO_2$ de l'air dans l'espace extérieur acquis à la deuxième étape et du mode d'opération sélectionné acquis à la troisième étape ; et
une cinquième étape de commande d'une quantité de ventilation sur la base de la concentration en $CO_2$ dans l'espace intérieur (27) acquise à la première étape et du seuil calculé à la quatrième étape, dans lequel
la quantité de ventilation commandée à la cinquième étape est commandée à une plus grande quantité lorsque la concentration en $CO_2$ dans l'espace intérieur (27) acquise à la première étape est plus élevée que le, ou égale au, seuil calculé à la quatrième étape que lorsque la concentration en $CO_2$ dans l'espace intérieur (27) acquise à la première étape est inférieure au seuil calculé à la quatrième étape ;
dans lequel la quatrième étape inclut l'acquisition d'une valeur de correction associée au mode d'opération sélectionné en tant que mode d'opération sélectionné acquis dans la troisième étape et le calcul du seuil sur la base de la concentration en $CO_2$ de l'air dans l'espace extérieur acquis dans la deuxième étape et de la valeur de correction acquise, et
dans lequel la valeur de correction est différente pour chacun des modes d'opération associés.

13. Procédé de commande de ventilation selon la revendication 12, dans lequel

la valeur de correction acquise dans la quatrième étape est une valeur de correction de valeur de commande utilisée pour calculer une valeur de commande pour la concentration de $CO_2$ dans l'espace intérieur (27), et
la quatrième étape inclut le calcul de la valeur de commande pour la concentration en $CO_2$ dans l'espace intérieur (27) sur la base de la concentration en $CO_2$ de l'air dans l'espace extérieur et de la valeur de correction de valeur de commande associée au mode d'opération sélectionné en tant que mode d'opération sélectionné, et le calcul du seuil sur la base de la valeur de commande pour la concentration en $CO_2$ dans l'espace intérieur (27) calculée.

14. Procédé de commande de ventilation selon la revendication 13, dans lequel, sous la même concentration en $CO_2$ de l'air dans l'espace extérieur, le seuil calculé dans la quatrième étape est une valeur plus élevée lorsqu'un mode d'opération dans lequel la valeur de commande pour la concentration en $CO_2$ dans l'espace intérieur (27) est élevée est sélectionné en tant que mode d'opération sélectionné que lorsqu'un mode d'opération dans lequel la valeur de commande pour la concentration en $CO_2$ dans l'espace intérieur (27) est faible est sélectionné en tant que mode d'opération sélectionné.

15. Procédé de commande de ventilation selon la revendication 12, dans lequel

la valeur de correction acquise dans la quatrième étape est une valeur de correction de seuil utilisée pour calculer le seuil, et
la quatrième étape comprend le calcul du seuil sur la base de la concentration en $CO_2$ de l'air dans l'espace extérieur et de la valeur de correction de seuil associée au mode d'opération sélectionné.

16. Procédé de commande de ventilation selon l'une quelconque des revendications 12 à 15, dans lequel, dans le même mode d'opération sélectionné en tant que mode d'opération sélectionné, le seuil calculé dans la quatrième étape est une valeur plus élevée lorsque la concentration en $CO_2$ de l'air dans l'espace extérieur est élevée que lorsque la concentration en $CO_2$ de l'air dans l'espace extérieur est faible.

17. Procédé de commande de ventilation selon l'une quelconque des revendications 12 à 16, comprenant une sixième étape consistant à

recevoir des informations relatives à une opération provenant d'un utilisateur, et

**EP 4 040 059 B1**

stocker un mode d'opération parmi la pluralité de modes d'opération en tant que mode d'opération sélectionné sur la base des informations relatives à l'opération provenant de l'utilisateur.

18. Procédé de commande de ventilation selon la revendication 17, dans lequel

le mode d'opération est un mode pour réaliser une opération correspondant à chaque valeur de commande pour la concentration de $CO_2$ dans l'espace intérieur (27), la valeur de commande pour la concentration de $CO_2$ dans l'espace intérieur (27) étant sélectionnée par l'utilisateur, et

la sixième étape inclut le stockage du mode d'opération pour réaliser une opération correspondant à la valeur de commande pour la concentration de $CO_2$ dans l'espace intérieur (27) sélectionné par l'utilisateur en tant que mode de fonctionnement sélectionné.

# FIG.1

EP 4 040 059 B1

# FIG.2

<u>13</u>

```
┌ ─ ─ ─ ─ ─ ─ ─ ─ ─ ─ ─ ─ ─ ─ ─ ─ ─ ─ ─ ─ ┐
│         31              32                │
│   ┌──────────────┐  ┌──────────────┐      │
│   │    FIRST     │  │    FIRST     │      │
│   │  PROCESSOR   │  │   MEMORY     │      │
│   └──────────────┘  └──────────────┘      │
│          ↕                 ↕              │
│   ◄──────┼─────────────────┼──────────►   │
│          ↕                                │
│   ┌──────────────────────┐                │
│   │   FIRST HARDWARE      │                │
│   │     INTERFACE         │                │
│   └──────────────────────┘                │
│              33                           │
└ ─ ─ ─ ─ ─ ─ ─ ─ ─ ─ ─ ─ ─ ─ ─ ─ ─ ─ ─ ─ ┘
```

# FIG.3

<u>17</u>

```
┌ ─ ─ ─ ─ ─ ─ ─ ─ ─ ─ ─ ─ ─ ─ ─ ─ ─ ─ ─ ─ ─ ─ ─ ─ ─ ┐
│       41              42                            │
│  ┌──────────┐    ┌──────────┐                       │
│  │  SECOND  │    │  SECOND  │                        │
│  │PROCESSOR │    │  MEMORY  │                        │
│  └──────────┘    └──────────┘                        │
│       ↕              ↕                               │
│  ◄────┼──────────────┼──────────┬──────────┬──────►  │
│       ↕              ↕          ↕          ↕         │
│ ┌──────────────┐ ┌────────┐ ┌────────┐              │
│ │SECOND HARDWARE│ │ INPUT  │ │DISPLAY │              │
│ │  INTERFACE    │ │ DEVICE │ │ DEVICE │              │
│ └──────────────┘ └────────┘ └────────┘              │
│       43            44          45                  │
└ ─ ─ ─ ─ ─ ─ ─ ─ ─ ─ ─ ─ ─ ─ ─ ─ ─ ─ ─ ─ ─ ─ ─ ─ ─ ┘
```

# FIG.4

# FIG.5

# FIG.6

START

$Q_{sa} = Q_{sa3}$
$Q_{ea} = Q_{ea3}$ — S100

DETECT Cra — S110

DETECT Coa — S120

ACQUIRE SELECTED OPERATION MODE — S130

ACQUIRE Wup — S140

CALCULATE Cup — S150

ACQUIRE Wt — S160

CALCULATE T — S170

PERFORM PROCESSING OF CONTROLLING AMOUNT OF VENTILATION — S180

# FIG.7

|  | FIRST OPERATION MODE | SECOND OPERATION MODE | THIRD OPERATION MODE |
|---|---|---|---|
| CORRECTION VALUE Wup OF UPPER LIMIT $CO_2$ CONCENTRATION VALUE | 1000 | 600 | 400 |

34

# FIG.8

START

S200

Cra < T1

NO

YES

S210

Cra < T2

NO

YES

S240

Qsa = Qsa3
Qea = Qea3

S230

Qsa = Qsa2
Qea = Qea2

S220

Qsa = Qsa1
Qea = Qea1

END

# FIG.9

# FIG.10

```
           ┌─────────┐
           │  START  │
           └────┬────┘
                │
                ▼
        ┌─────────────────┐
        │  Qsa = Qsa3     │─────── S100
        │  Qea = Qea3     │
        └────────┬────────┘
                 │
        ┌────────▼────────┐
        │   DETECT Cra    │─────── S110
        └────────┬────────┘
                 │
        ┌────────▼────────┐
        │   DETECT Coa    │─────── S120
        └────────┬────────┘
                 │
        ┌────────▼────────┐
        │    ACQUIRE      │
        │    SELECTED     │─────── S130
        │   OPERATION     │
        │     MODE        │
        └────────┬────────┘
                 │
        ┌────────▼────────┐
        │   ACQUIRE Wt    │─────── S161
        └────────┬────────┘
                 │
        ┌────────▼────────┐
        │   CALCULATE T   │─────── S171
        └────────┬────────┘
                 │
        ┌────────▼────────┐
        │     PERFORM     │
        │  PROCESSING OF  │
        │  CONTROLLING    │─────── S180
        │   AMOUNT OF     │
        │   VENTILATION   │
        └────────┬────────┘
                 │
```

# FIG.11

| | FIRST OPERATION MODE | SECOND OPERATION MODE | THIRD OPERATION MODE |
|---|---|---|---|
| FIRST THRESHOLD CORRECTION VALUE Wt1 | 800 | 400 | 200 |
| SECOND THRESHOLD CORRECTION VALUE Wt2 | 700 | 300 | 100 |

FIG.12

# FIG.13

EP 4 040 059 B1

**EP 4 040 059 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014095532 A

- US 20120064818 A1